# EUROPEAN PATENT APPLICATION

(11) **EP 4 779 447 A1**
(43) Date of publication of application: **22.07.2026**
(21) Application number: 24894734.3
(22) Date of filing: 27.09.2024
(51) Int. Cl.: G06F 3/0484, G06F 3/0481, G06F 16/957, G06F 16/904, G06F 16/9032, G06F 16/44, G06F 16/955, H04N 13/344

(54) **METHOD AND DEVICE FOR STORING INFORMATION FOR ACCESSING PAGES**

(30) Priority: 20.11.2023 KR 20230161591; 14.12.2023 KR 20230181892
(71) Applicant: Samsung Electronics Co., Ltd., Suwon-si, Gyeonggi-do 16677 (KR)
(72) Inventor: KO, Yumi, Suwon-si Gyeonggi-do 16677 (KR); KIM, Sijung, Suwon-si Gyeonggi-do 16677 (KR); SON, Dongil, Suwon-si Gyeonggi-do 16677 (KR); LEE, Wonjae, Suwon-si Gyeonggi-do 16677 (KR); HAN, Woojung, Suwon-si Gyeonggi-do 16677 (KR)
(74) Representative: Gulde & Partner
(86) International application number: PCT/KR2024/096226
(87) International publication number: WO 2025/110844

(57) **Abstract**

This electronic device comprises: a display; one or more processors including a processing circuit; and a memory including one or more storage media in which instructions are stored, wherein, when executed by the one or more processors, the instructions can cause the electronic device to: display a preceding page; display a target page after displaying the preceding page; acquire a user bookmark input about bookmarking of the target page; store, in the memory, bookmark information including information for accessing the target page; and, on the basis of the relevance between the preceding page and the target page, add the information for accessing the preceding page to the bookmark information.

## Description

### TECHNICAL FIELD

Hereinafter, technology for storing information for accessing a page is disclosed.

### BACKGROUND ART

Recently, virtual reality (VR), augmented reality (AR), and mixed reality (MR) technologies that utilize computer graphics technology are being developed. VR technology refers to technology that uses a computer to establish a virtual space that does not exist in the real world and then makes the virtual space feel like reality, while AR or MR technology refers to technology that superimposes computer-generated information onto the real world, that is, technology that allows real-time interaction with a user by combining the real world and virtual world.

Among these, AR and MR technologies are being utilized in conjunction with technologies in various fields (e.g., broadcasting technology, medical technology, and gaming technology). Representative examples of AR technology being applied in the broadcasting technology field include a case in which the weather map in front of a weathercaster giving a weather forecast on a television (TV) changes naturally or a case in which an advertising image that does not exist in the stadium during a sports broadcast is inserted into a screen and transmitted as if the advertising image is actually in the stadium.

A representative service that provides AR or MR to a user is the metaverse. This metaverse is a compound word of 'meta,' meaning fiction or abstraction, and 'universe,' meaning the real world, and refers to a three-dimensional (3D) virtual world. The metaverse is a more advanced concept than the existing term, "virtual reality environment," and provides an AR environment in which virtual worlds, such as the web and the internet, are absorbed into the real world.

### DISCLOSURE OF THE INVENTION

### TECHNICAL SOLUTIONS

An electronic device includes a display, a processor, and memory storing instructions, in which the instructions, when executed by the processor, cause the electronic device to display a preceding page, display a target page after displaying the preceding page, obtain a bookmark input of a user for bookmarking the target page, storing, in the memory, bookmark information including information for accessing the target page, and add information for accessing the preceding page to the bookmark information, based on a relevance between the preceding page and the target page.

A method, performed by an electronic device, includes displaying a preceding page on a display, displaying a target page after displaying the preceding page, obtaining a bookmark input of a user for bookmarking the target page, storing, in memory, bookmark information including information for accessing the target page, and adding information for accessing the preceding page to the bookmark information, based on a relevance between the preceding page and the target page.

### BRIEF DESCRIPTION OF DRAWINGS

FIG. 1 is a block diagram illustrating an exemplary configuration of an electronic device, according to various embodiments.
FIG. 2 illustrates an example of an optical see-through (OST) device, according to various embodiments.
FIG. 3 illustrates an example of an optical system of an eye-tracking (ET) camera, a transparent member, and a display, according to various embodiments.
FIGS. 4A and 4B are diagrams illustrating examples of a front view and a rear view of an electronic device, according to various embodiments.
FIG. 5 illustrates an example of the construction of a virtual space and an input from and an output to a user in the virtual space, according to various embodiments.
FIG. 6 is a diagram illustrating an example of a method of bookmarking a page, which is performed by an electronic device, according to various embodiments.
FIG. 7 is a diagram illustrating an example of an operation in which an electronic device provides a display history of a page, according to various embodiments.
FIG. 8 is a diagram illustrating an example of an operation in which an electronic device displays a target page when a display command for the target page is received from an external device, according to various embodiments.
FIG. 9 illustrates an example of an operation in which an electronic device re-performs a corresponding function after bookmarking a page for at least some of a plurality of operations including a function, according to various embodiments.
FIG. 10 is a diagram illustrating an example of an operation in which an electronic device performs a plurality of operations including a function, according to various embodiments.
FIGS. 11A and 11B illustrate an exemplary interface of an operation of displaying a plurality of pages together, according to various embodiments.
FIG. 12 is a diagram illustrating an example of an operation in which an electronic device determines a relevance between search screens based on a relevance between search requests, according to various embodiments.
FIG. 13 is a diagram illustrating an example of an operation in which an electronic device provides an interface for comparing a plurality of pages, according to various embodiments.
FIGS. 14A, 14B, 14C, and 14D are diagrams illustrating examples of a placement of a screen for displaying a result page including a search result, according to various embodiments.
FIG. 15 is a diagram illustrating an example of an operation in which an electronic device provides a comparison interface between a plurality of target pages and a plurality of preceding pages, according to various embodiments.
FIG. 16 is a diagram illustrating an example of an operation in which an electronic device obtains an input of a user after bookmarking a target page, according to various embodiments.

### MODE FOR CARRYING OUT THE INVENTION

Hereinafter, the embodiments will be described in detail with reference to the accompanying drawings. When describing the embodiments with reference to the accompanying drawings, like reference numerals refer to like components, and any repeated description related thereto will be omitted.

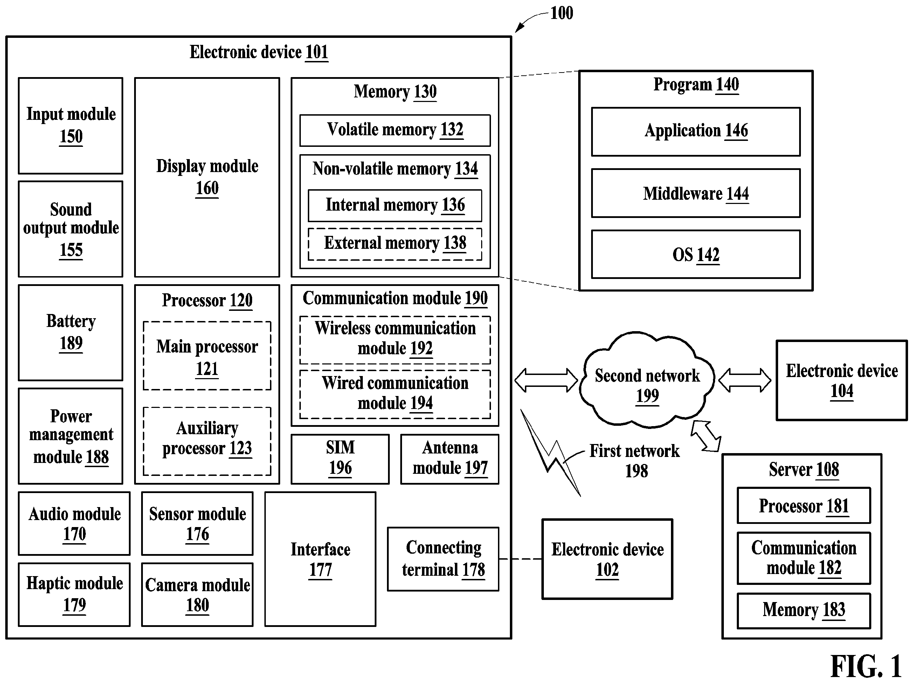

FIG. 1 is a block diagram illustrating an exemplary configuration of an electronic device, according to various embodiments.

FIG. 1 is a block diagram illustrating an electronic device 101 in a network environment 100, according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., the electronic device 102) (e.g., a speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199.

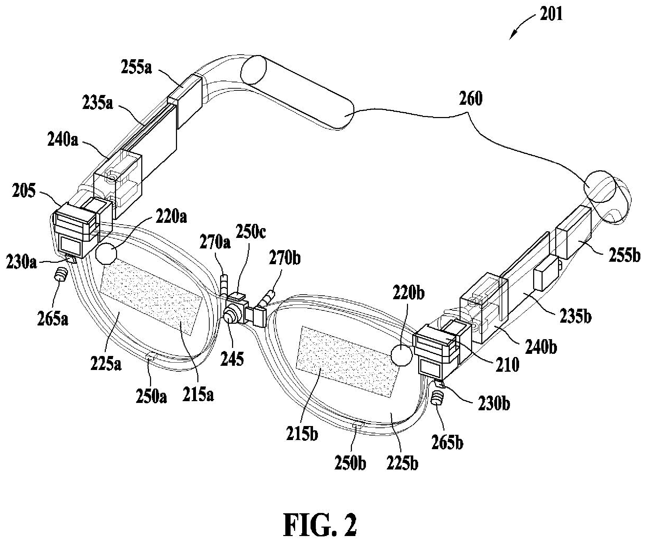

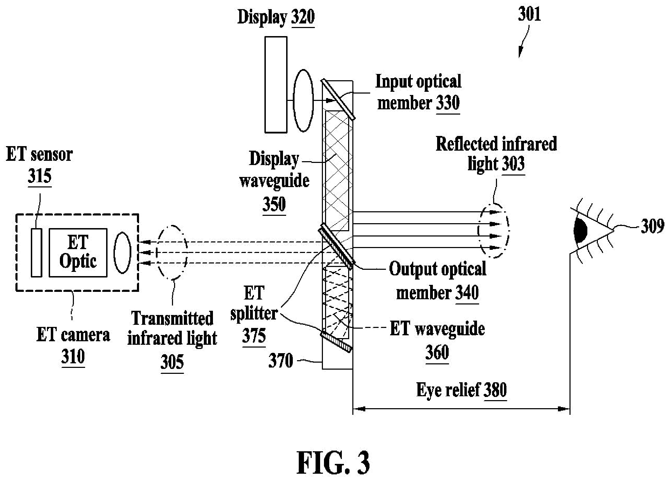

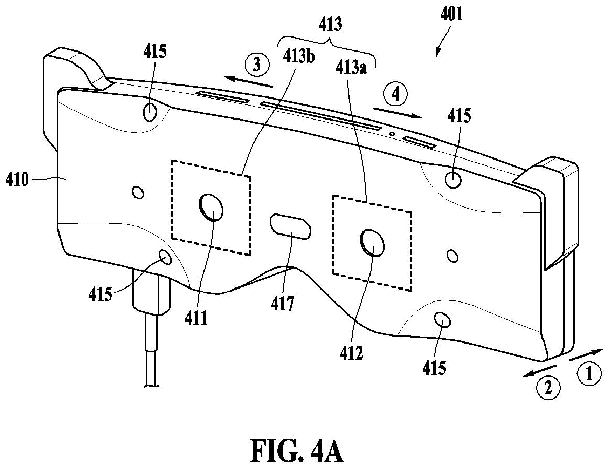

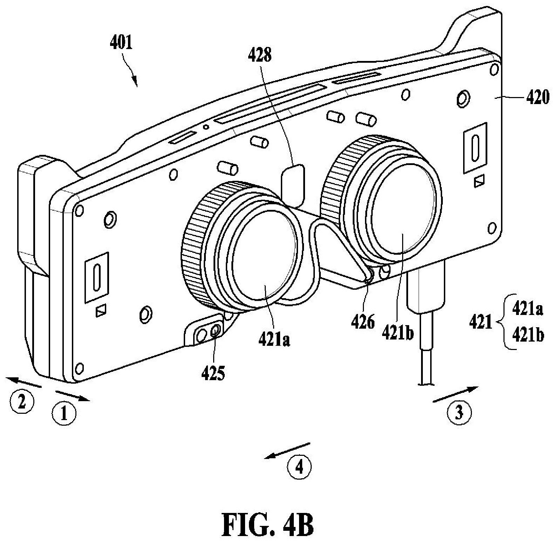

Each of the external electronic devices 102 and 104, and the server 108 may be a device of the same type as or a different type from the electronic device 101. According to an embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. In the disclosure, an example in which the electronic device 101 is an augmented reality (AR) device (e.g., an electronic device 201 of FIG. 2, an electronic device 301 of FIG. 3, or an electronic device 401 of FIG. 4), and the server 108 among the external electronic devices 102 and 104, and the server 108 transmits, to the electronic device 101, a result of executing a virtual space and an additional function or service associated with the virtual space will be mainly described.

The server 108 may include a processor 181, a communication module 182, and memory 183. The processor 181, the communication module 182, and the memory 183 may be similarly configured to the processor 120, the communication module 190, and the memory 130 of the electronic device 101. For example, the processor 181 may provide a virtual space and an interaction between users in the virtual space by executing instructions stored in the memory 183. The processor 181 may generate at least one of visual information, auditory information, or tactile information of the virtual space and objects in the virtual space. For example, as the visual information, the processor 181 may generate rendered data (e.g., visual rendered data) obtained by rendering an appearance (e.g., a shape, size, color, or texture) of the virtual space and an appearance (e.g., a shape, size, color, or texture) of an object positioned in the virtual space. Additionally, the processor 181 may generate rendered data obtained by rendering changes (e.g., a change in an appearance of an object, sound generation, or tactile sensation generation) based on at least one of an interaction between objects (e.g., a physical object, a virtual object, or an avatar object) in the virtual space, or a user input to an object (e.g., a physical object, virtual object, or avatar object). The communication module 182 may establish communication with a first electronic device (e.g., the electronic device 101) of a user and a second electronic device (e.g., the electronic device 102) of another user. The communication module 182 may transmit at least one of visual information, tactile information, or auditory information described above to the first electronic device and the second electronic device. For example, the communication module 182 may transmit rendered data.

For example, the server 108 may render content data executed in an application and transmit the rendered content data to the electronic device 101, and the electronic device 101 receiving the data may output the content data to the display module 160. When the electronic device 101 detects a movement of a user through an inertial measurement unit (IMU) sensor or the like, the processor 120 of the electronic device 101 may correct the rendered data received from the external electronic device 102 based on the movement information and output the corrected movement information to the display module 160. Alternatively, the processor 120 may transmit the movement information to the server 108 to request rendering such that screen data is updated accordingly. However, embodiments are not limited thereto, and the rendering may be performed by various types of external electronic devices (e.g., 102 and 104) such as a smartphone or a case device for storing and charging the electronic device 101. The rendered data corresponding to the virtual space generated by the external electronic devices 102 and 104 may be provided to the electronic device 101. In another example, the electronic device 101 may receive virtual spatial information (e.g., vertex coordinates, texture, and color defining a virtual space) and object information (e.g., vertex coordinates, texture, and color defining an appearance of an object) from the server 108 and perform rendering by itself based on the received data.

FIG. 2 illustrates an example of an optical see-through (OST) device, according to various embodiments.

An electronic device 201 may include at least one of a display (e.g., the display module 160 of FIG. 1), a vision sensor, light sources 230a and 230b, an optical element, or a substrate. The electronic device 201 including a transparent display and providing an image through the transparent display may be referred to as an OST device.

For example, the display may include a liquid crystal display (LCD), a digital mirror device (DMD), a liquid crystal on silicon (LCoS), an organic light-emitting diode (OLED), or a micro light-emitting diode (micro-LED).

In an embodiment, when the display is one of an LCD, a DMD, or an LCoS, the electronic device 201 may include the light sources 230a and 230b configured to emit light to a screen output area (e.g., screen display portions 215a and 215b) of the display. In another embodiment, when the display is capable of generating light by itself, for example, when the display is either the OLED or the micro-LED, the electronic device 201 may provide a virtual image with a relatively high quality to a user even though the separate light sources 230a and 230b are not included. In an embodiment, when the display is implemented as an OLED or a micro-LED, the light sources 230a and 230b may be unnecessary, which may lead to lightening of the electronic device 201.

Referring to FIG. 2, the electronic device 201 may include the display, a first transparent member 225a, and/or a second transparent member 225b, and the user may use the electronic device 201 while wearing the electronic device 201 on the face of the user. The first transparent member 225a and/or the second transparent member 225b may be formed of a glass plate, a plastic plate, or a polymer, and may be transparently or translucently formed. According to an embodiment, the first transparent member 225a may be disposed to face the right eye of the user, and the second transparent member 225b may be disposed to face the left eye of the user. The display may include a first display 205 configured to output a first image (e.g., a right image) corresponding to the first transparent member 225a and a second display 210 configured to output a second image (e.g., a left image) corresponding to the second transparent member 225b. According to an embodiment, when each display is transparent, the displays and the transparent members may be disposed to face the eyes of the user to configure the screen display portions 215a and 215b.

In an embodiment, a light path of light emitted from the displays 205 and 210 may be guided by a waveguide through input optical members 220a and 220b. Light moving into the waveguide may be guided toward the eyes of a user through an output optical member (e.g., an output optical member 340 of FIG. 3). The screen display portions 215a and 215b may be determined based on light emitted toward the eyes of the user.

For example, the light emitted from the displays 205 and 210 may be reflected from a grating region of the waveguide formed in the input optical members 220a and 220b and the screen display portions 215a and 215b, and may be transmitted to the eyes of the user.

The optical element may include at least one of a lens or an optical waveguide.

The lens may adjust a focus such that a screen output to the display may be visible to the eyes of the user. The lens may include, for example, at least one of a Fresnel lens, a pancake lens, or a multichannel lens.

The optical waveguide may transmit an image ray generated by the display to the eyes of the user. For example, the image rays may represent rays of light emitted by the light sources 230a and 230b, that pass through the screen output area of the display. The optical waveguide may be formed of glass, plastic, or polymer. The optical waveguide may have a nanopattern formed on one inside surface or one outside surface, for example, a grating structure of a polygonal or curved shape. An exemplary structure of the optical waveguide is described below with reference to FIG. 3.

The vision sensor may include at least one of a camera sensor or a depth sensor.

First cameras 265a and 265b, which are recognition cameras, may be cameras used for 3 degrees of freedom (DoF) or 6DoF head tracking, hand detection, hand tracking, and space recognition. The first cameras 265a and 265b may mainly include a global shutter (GS) camera. Since a stereo camera is required for head tracking and space recognition, the first cameras 265a and 265b may include two or more GS cameras. A GS camera may have a more excellent performance compared to a rolling shutter (RS) camera, in terms of detecting and tracking a fine movement, such as a quick movement of a hand or a finger. For example, the GS camera may have a low image blur. The first cameras 265a and 265b may capture image data used for a simultaneous localization and mapping (SLAM) function through depth capturing and space recognition for 6DoF. In addition, a user gesture recognition function may be performed based on image data captured by the first cameras 265a and 265b.

Second cameras 270a and 270b, which are eye-tracking (ET) cameras, may be used to capture image data for detecting and tracking the pupils of the user. The second cameras 270a and 270b are described with reference to FIG. 3 below.

A third camera 245 may be an image-capturing camera. The third camera 245 may include a high-resolution (HR) camera to capture an HR image or a photo video (PV) image. The third camera 245 may include a color camera having functions for obtaining a high-quality image, such as, an automatic focus (AF) function and an optical image stabilizer (OIS). The third camera 245 may be a GS camera or an RS camera.

A fourth camera (e.g., face recognition cameras 425 and 426 of FIG. 4 below) is a face recognition camera, and a face-tracking (FT) camera may be used to detect and track facial expressions of the user.

A depth sensor (not shown) may be a sensor configured to sense information for determining a distance to an object such as time of flight (TOF). The TOF is technology for measuring a distance to an object using a signal (e.g., a near infrared ray, ultrasound, laser, etc.). A TOF-based depth sensor may transmit a signal from a transmitter and measure the signal by a receiver, thereby measuring a TOF of the signal.

The light sources 230a and 230b (e.g., illumination modules) may include an element (e.g., an LED) configured to emit light of various wavelengths. The illumination module may be attached to various positions depending on the purpose of use. In an example of use, a first illumination module (e.g., an LED element), attached around a frame of an AR glasses device, may emit light for assisting gaze detection when tracking a movement of the eyes with an ET camera. The first illumination module may include, for example, an IR LED of an infrared wavelength. In another example of use, a second illumination module (e.g., an LED element) may be attached around hinges 240a and 240b connecting a frame and a temple or attached in proximity to a camera mounted around a bridge connecting the frame. The second illumination module may emit light for supplementing ambient brightness when the camera captures an image. When it is not easy to detect a subject in a dark environment, the second illumination module may emit light.

Substrates 235a and 235b (e.g., PCBs) may support the components described above.

The PCB may be disposed on temples of the glasses. A flexible PCB (FPCB) may transmit an electrical signal to each module (e.g., a camera, a display, an audio module, and a sensor module) and another PCB. According to an embodiment, at least one PCB may include a first substrate, a second substrate, and an interposer disposed between the first substrate and the second substrate. An electrical signal may be transmitted to each module and the other PCB.

The other components may include, for example, at least one of a plurality of microphones (e.g., a first microphone 250a, a second microphone 250b, and a third microphone 250c), a plurality of speakers (e.g., a first speaker 255a and a second speaker 255b), a battery 260, an antenna, or a sensor (e.g., an acceleration sensor, a gyro sensor, a touch sensor, etc.).

FIG. 3 illustrates an example of an optical system of an ET camera, a transparent member, and a display, according to various embodiments.

FIG. 3 is a diagram illustrating an operation of an ET camera included in an electronic device, according to an embodiment. FIG. 3 illustrates a process in which an ET camera 310 (e.g., a first ET camera 270a and a second ET camera 270b of FIG. 2) of an electronic device 301 according to an embodiment tracks an eye 309 of the user, that is, a gaze of the user, using light (e.g., infrared light) output from a display 320 (e.g., the first display 205 and the second display 210 of FIG. 2).

A second camera (e.g., the second cameras 270a and 270b of FIG. 2) may be the ET camera 310 that collects information for positioning the center of a virtual image projected onto the electronic device 301 according to a direction at which pupils of a wearer of the electronic device 301 gaze. The second camera may also include a GS camera to detect the pupils and track the rapid movement of the pupils. The ET cameras may be installed for the right eye and the left eye, and the ET cameras having the same camera performance and specifications may be used. The ET camera 310 may include an ET sensor 315. The ET sensor 315 may be included inside the ET camera 310. The infrared light output from the display 320 may be transmitted as reflected infrared light 303 to the eye 309 of the user by a half mirror. The ET sensor 315 may detect transmitted infrared light 305 that is generated when the reflected infrared light 303 is reflected from the eye 309 of the user. The ET camera 310 may track the eye 309 of the user, that is, the gaze of the user, based on the result of the detection by the ET sensor 315.

The display 320 may include a plurality of visible light pixels and a plurality of infrared pixels. The visible light pixels may include R, G, and B pixels. The visible light pixels may output visible light corresponding to a virtual object image. The infrared pixels may output infrared light. The display 320 may include, for example, micro LEDs or OLEDs.

A display waveguide 350 and an ET waveguide 360 may be included in a transparent member 370 (e.g., the first transparent member 225a and the second transparent member 225b of FIG. 2). The transparent member 370 may be formed as, for example, a glass plate, a plastic plate, or a polymer and may be transparently or translucently formed. The transparent member 370 may be disposed to face an eye of a user. In this case, a distance between the transparent member 370 and the eye 309 of the user may be referred to as an "eye relief" 380.

The transparent member 370 may include the display waveguide 350 and the ET waveguide 360. The transparent member 370 may include an input optical member 330 and an output optical member 340. In addition, the transparent member 370 may include an ET splitter 375 that splits input light into several waveguides.

According to an embodiment, light incident to one end of the display waveguide 350 may be propagated inside the display waveguide 350 by a nanopattern and may be provided to a user. In addition, the display waveguide 350 formed of a free-form prism may provide incident light as an image ray to the user through a reflection mirror. The display waveguide 350 may include at least one of a diffractive element (e.g., a diffractive optical element (DOE) or a holographic optical element (HOE)) or a reflective element (e.g., a reflection mirror). The display waveguide 350 may guide display light (e.g., an image ray) emitted from the light source to the eyes of the user, using at least one of the diffractive element or the reflective element included in the display waveguide 350. For reference, although FIG. 3 illustrates that the output optical member 340 is separate from the ET waveguide 360, the output optical member 340 may be included in the ET waveguide 360.

According to various embodiments, the diffractive element may include the input optical member 330 and the output optical member 340. For example, the input optical member 330 may refer, for example, to an "input grating region." The output optical member 340 may refer, for example, to an "output grating region." The input grating region may serve as an input end that diffracts (or reflects) light, that is output from a micro-LED, to transmit the light to a transparent member (e.g., a first transparent member and a second transparent member) of a screen display portion. The output grating region may serve as an exit that diffracts (or reflects), to the eyes of the user, the light transmitted to the transparent member (e.g., the first transparent member and the second transparent member) of a waveguide.

According to various embodiments, the reflective element may include a total internal reflection (TIR) waveguide or a TIR optical element for TIR. For example, TIR, which is one scheme for inducing light, may form an angle of incidence such that light (e.g., a virtual image) entering through the input grating region is completely reflected from one surface (e.g., a specific surface) of the waveguide, to completely transmit the light to the output grating region.

In an embodiment, a light path of the light emitted from the display 320 may be guided by the waveguide through the input optical member 330. The light moving into the waveguide may be guided toward the eyes of the user through the output optical member 340. The screen display portion may be determined based on the light emitted toward the eyes of the user.

FIGS. 4A and 4B are diagrams illustrating examples of a front view and a rear view of an electronic device, according to various embodiments. FIG. 4A may be an appearance of an electronic device 401 viewed in a first direction ①, and FIG. 4B may be an appearance of the electronic device 401 viewed in a second direction ②. When a user wears the electronic device 401, the appearance viewed by the user's eyes may be shown in FIG. 4B.

Referring to FIG. 4A, according to various embodiments, the electronic device 401 (e.g., the electronic device 101 of FIG. 1, the electronic device 201 of FIG. 2, or the electronic device 301 of FIG. 3) may provide a service providing an extended reality (XR) experience to the user. For example, the XR or XR service may be defined as a service that collectively refers to virtual reality (VR), AR, and/or mixed reality (MR).

According to an embodiment, the electronic device 401 may refer to a head-mounted device or head-mounted display (HMD) worn on the head of the user but may be provided in the form of at least one of glasses, goggles, a helmet, or a hat. The electronic device 401 may include some types such as an OST type configured such that, when being worn, external light reaches the eyes of the user through glasses or a video see-through (VST) type configured such that, when being worn, light emitted from a display reaches the eyes of the user but external light is blocked not to reach the eyes of the user.

According to an embodiment, the electronic device 401 may be worn on the head of the user and provide images related to an XR service to the user. For example, the electronic device 401 may provide XR content (hereinafter, also referred to as an XR content image) output such that at least one virtual object is visible overlapping in a display area or an area determined to be a field of view (FOV) of the user. According to an embodiment, the XR content may refer to an image related to a real space obtained through a camera (e.g., an image-capturing camera) or an image or video in which at least one virtual object is added to a virtual space. According to an embodiment, the electronic device 401 may provide XR content based on a function being performed by the electronic device 401 and/or a function being performed by one or more external electronic devices of external electronic devices (e.g., the electronic devices 102 and 104 of FIG. 1 and the server 108 of FIG. 1).

According to an embodiment, the electronic device 401 may be at least partially controlled by an external electronic device (e.g., the electronic device 102 or 104 of FIG. 1), or may perform at least one function under the control of the external electronic device or perform at least one function independently.

Referring to FIG. 4A, a vision sensor may be disposed on a first surface of a housing of a main body 410 of the electronic device 401. The vision sensor may include cameras (e.g., second function cameras 411 and 412, and first function cameras 415) and/or a depth sensor 417 for obtaining information related to the surrounding environment of the electronic device 401.

In an embodiment, the second function cameras 411 and 412 may obtain images related to the surrounding environment of the electronic device 401. With a wearable electronic device worn by the user, the first function cameras 415 may obtain images. The first function cameras 415 may be used for hand detection and tracking, and recognition of gestures (e.g., hand gestures) of the user. The first function cameras 415 may be used for 3DoF and 6DoF head tracking, position (space, environment) recognition, and/or movement recognition. In an embodiment, the second function cameras 411 and 412 may also be used for hand detection and tracking, and the recognition of user gestures.

In an embodiment, the depth sensor 417 may be configured to transmit a signal and receive a signal reflected from an object and may be used to determine a distance to an object based on the TOF. Alternatively of or additionally, the cameras 411, 412, and 415 may determine the distance to the object in place of the depth sensor 417.

Referring to FIG. 4B, the face recognition cameras 425 and 426 and/or a display 421 (and/or a lens) may be disposed on a second surface 420 of the housing of the main body 410.

In an embodiment, the face recognition cameras 425 and 426 adjacent to a display may be used to recognize the face of the user or may recognize and/or track both eyes of the user.

In an embodiment, the display 421 (and/or a lens) may be disposed on the second surface 420 of the electronic device 401. In an embodiment, the electronic device 401 may not include some of the plurality of cameras 415. Although not shown in FIGS. 4A and 4B, the electronic device 401 may further include at least one of the components shown in FIG. 2.

According to an embodiment, the electronic device 401 may include the main body 410 on which at least some of the components of FIG. 1 are mounted, the display 421 (e.g., the display module 160 of FIG. 1) disposed in the first direction ① of the main body 410, the first function cameras 415 (e.g., recognition cameras) disposed in the second direction ② of the main body 410, the second function cameras 411 and 412 (e.g., image-capturing cameras) disposed in the second direction ②, a third function camera 428 (e.g., an ET camera) disposed in the first direction ①, fourth function cameras (e.g., the face recognition cameras 425 and 426) disposed in the first direction ①, the depth sensor 417 disposed in the second direction ②, and a touch sensor 413 disposed in the second direction ②. Although not shown in the drawings, the main body 410 may include memory (e.g., the memory 130 of FIG. 1) and a processor (e.g., the processor 120 of FIG. 1) therein and may further include other components shown in FIG. 1.

According to an embodiment, the display 421 may include an LCD, a DMD, an LCoS device, an OLED, or a micro-LED.

In an embodiment, when the display 421 is one of an LCD, a DMD, or an LCoS device, the electronic device 401 may include a light source that emits light to a screen output area of the display 421. In another embodiment, when the display 421 is capable of generating light by itself, for example, when the electronic device 401 is formed of one of an OLED or a micro-LED, the electronic device 401 may provide an XR content image with a relatively high quality to the user, even though a separate light source is not included. In an embodiment, when the display 421 is implemented as an OLED or a micro-LED, a light source may be unnecessary, which may lead to lightening of the electronic device 401.

According to an embodiment, the display 421 may include a first transparent member 421a and/or a second transparent member 421b. The user may use the electronic device 401 with the electronic device 401 worn on the face. The first transparent member 421a and/or the second transparent member 421b may be formed of a glass plate, a plastic plate, or a polymer and may be transparently or translucently formed. According to an embodiment, the first transparent member 421a may be disposed to face the left eye of the user in a fourth direction ④, and the second transparent member 421b may be disposed to face the right eye of the user in a third direction ③. According to various embodiments, when the display 421 is transparent, the display 421 may be disposed at a position facing the eyes of the user to form a display area.

According to an embodiment, the display 421 may include a lens including a transparent waveguide. The lens may serve to adjust the focus such that a screen (e.g., an XR content image) output to the display 421 is to be viewed by the eyes of the user. For example, light emitted from a display panel may pass through the lens and be transmitted to the user through the waveguide formed within the lens. The lens may include, for example, a Fresnel lens, a pancake lens, or a multichannel lens.

An optical waveguide (e.g., a waveguide) may serve to transmit a light source generated by the display 421 to the eyes of the user. The optical waveguide may be formed of glass, plastic, or a polymer and may have a nanopattern formed on a portion of an inner or outer surface, for example, a grating structure of a polygonal or curved shape. According to an embodiment, light incident to one end of the optical waveguide, that is, an output image of the display 421 may be propagated inside the optical waveguide to be provided to the user. In addition, the optical waveguide formed of a free-form prism may provide the incident light to the user through a reflection mirror. The optical waveguide may include at least one of diffractive elements (e.g., a DOE and an HOE) or at least one of reflective elements (e.g., a reflection mirror). The optical waveguide may guide an image output from the display 421 to the eyes of the user using the at least one diffractive element or reflective element included in the optical waveguide.

According to an embodiment, the diffractive element may include an input optical member/output optical member (not shown). For example, the input optical member may refer to an input grating region, and the output optical member (not shown) may refer to an output grating region. The input grating region may serve as an input end that diffracts (or reflects) light, output from a light source (e.g., a micro-LED), to transmit the light to a transparent member (e.g., the first transparent member 421a and the second transparent member 421b) of the display area. The output grating region may serve as an exit that diffracts (or reflects), to the eyes of the user, the light transmitted to the transparent member (e.g., the first transparent member and the second transparent member) of the optical waveguide.

According to various embodiments, the reflective element may include a TIR optical element or a TIR waveguide for TIR. For example, TIR, which is a scheme for guiding light, may generate an angle of incidence such that light (e.g., a virtual image) input through the input grating region is substantially completely reflected from one surface (e.g., a specific surface) of the optical waveguide, to completely transmit the light to the output grating region.

In an embodiment, a light path of light emitted from the display 421 may be guided by the waveguide through the input optical member. Light moving into the optical waveguide may be guided toward the eyes of the user through the output optical member. The display area may be determined based on the light emitted in the direction of the eyes.

According to an embodiment, the electronic device 401 may include a plurality of cameras. For example, the cameras may include the first function cameras 415 (e.g., recognition cameras) disposed in the second direction ② of the main body 410, the second function cameras 411 and 412 (e.g., image-capturing cameras) disposed in the second direction ②, the third function camera 428 (e.g., an ET camera) disposed in the first direction ①, and/or the fourth function cameras (e.g., the face recognition cameras 425 and 426) disposed in the first direction ①, and may further include other function cameras (not shown).

The first function cameras 415 (e.g., the recognition cameras) may be used for a function of detecting a movement of the user or recognizing a gesture of the user. The first function cameras 415 may support at least one of head tracking, hand detection and hand tracking, and space recognition. For example, the first function cameras 415 may mainly use a GS camera having excellent performance compared to an RS camera to detect and track fine gestures or movements of hands and fingers and may be configured as a stereo camera including two or more GS cameras for head tracking and space recognition. The first function cameras 415 may perform functions, such as, 6DoF space recognition, and a SLAM function for recognizing information (e.g., a position and/or direction) associated with a surrounding space through depth imaging.

The second function cameras 411 and 412 (e.g., the image-capturing cameras) may be used to capture images of the outside, generate an image or video corresponding to the outside, and transmit the image or video to a processor (e.g., the processor 120 of FIG. 1). The processor may display the image provided from the second function cameras 411 and 412 on the display 421. The second function cameras 411 and 412 may also be referred to as HR or PV cameras and may include an HR camera. For example, the second function cameras 411 and 412 may include color cameras equipped with a function for obtaining high-quality images, such as an AF function and OIS, but are not limited thereto. The second function cameras 411 and 412 may also include a GS camera or an RS camera.

The third function camera 428 (e.g., the ET camera) may be disposed on the display 421 (or inside the main body) such that camera lenses face the eyes of the user when the user wears the electronic device 401. The third function camera 428 may be used for detecting and tracking the pupils (e.g., ET). The processor may verify a gaze direction by tracking movements of the left eye and the right eye of the user in an image received from the third function camera 428. By tracking the positions of the pupils in the image, the processor may be configured such that the center of an XR content image displayed on the display area is positioned according to a direction in which the pupils are gazing. For example, the third function camera 428 may use a GS camera to detect the pupils and track the movements of the pupils. The third function camera 428 may be installed for each of the left eye and the right eye and may have the same camera performance and specifications.

The fourth function cameras (e.g., the face recognition cameras 425 and 426) may be used to detect and track a facial expression of the user (e.g., FT) when the user wears the electronic device 401.

According to an embodiment, the electronic device 401 may include a lighting unit (e.g., LED) (not shown) as an auxiliary means for cameras. For example, the third function camera 425 may use a lighting unit included in a display as an auxiliary means for facilitating gaze detection when tracking eye movements, to direct emitted light (e.g., IR LED of an IR wavelength) toward both eyes of the user. In another example, the second function cameras 411 and 412 may further include a lighting unit (e.g., a flash) as an auxiliary means for supplementing surrounding brightness when capturing an image of the outside.

According to an embodiment, the depth sensor 417 (or a depth camera) may be used to verify a distance to an object (e.g., a target) through, for example, TOF. TOF, which is technology for measuring a distance to an object using a signal (e.g., near-infrared rays, ultrasound, or laser), may transmit a signal from a transmitter and then measure the signal by a receiver, and may measure a distance to an object based on the TOF of the signal.

According to an embodiment, the touch sensor 413 may be disposed in the second direction ② of the main body 410. For example, when the user wears the electronic device 401, the eyes of the user may view in the first direction ① of the main body. The touch sensor 413 may be implemented as a single type or a left/right separated type based on the shape of the main body 410 but is not limited thereto. For example, in a case in which the touch sensor 413 is implemented as the left/right separated type as shown in FIG. 4A, when the user wears the electronic device 401, a first touch sensor 413a may be disposed at a position corresponding to the left eye of the user in the fourth direction ④, and a second touch sensor 413b may be disposed at a position corresponding to the right eye of the user in the third direction ③.

The touch sensor 413 may recognize a touch input using at least one of, for example, capacitive, resistive, infrared, or ultrasonic method. For example, the touch sensor 413 using the capacitive method may recognize a physical touch (or contact) input or hovering (or proximity) input of an external object. According to some embodiments, the electronic device 401 may use a proximity sensor (not shown) to recognize the proximity to an external object.

According to an embodiment, the touch sensor 413 may have a two-dimensional (2D) surface and transmit, to a processor (e.g., the processor 120 of FIG. 1), touch data (e.g., touch coordinates) of an external object (e.g., a finger of the user) contacting the touch sensor 413. The touch sensor 413 may detect a hovering input of an external object (e.g., a finger of the user) approaching within a first distance away from the touch sensor 413 or detect a touch input contacting the touch sensor 413.

In an embodiment, the touch sensor 413 may provide 2D information about the contact point to the processor 120 as "touch data" when an external object touches the touch sensor 413. The touch data may be described as a "touch mode." When the external object is positioned within the first distance from the touch sensor 413 (or hovers above a proximity or touch sensor), the touch sensor 413 may provide hovering data about a time point or position of the external object hovering around the touch sensor 413 to the processor 120. The hovering data may also be described as a "hovering mode/proximity mode."

According to an embodiment, the electronic device 401 may obtain the hovering data using at least one of the touch sensor 413, a proximity sensor (not shown), and/or the depth sensor 417 to generate information about a distance between the touch sensor 413 and an external object, a position, or a time point.

According to an embodiment, the main body 410 may include a processor (e.g., the processor 120 of FIG. 1) and memory (e.g., the memory 130 of FIG. 1) therein.

The memory may store various instructions that may be executed by the processor. The instructions may include control instructions, such as arithmetic and logical operations, data movement, or input/output, which may be recognized by the processor. The memory may include a volatile memory (e.g., the volatile memory 132 of FIG. 1) and a non-volatile memory (e.g., the non-volatile memory 134 of FIG. 1) to store, temporarily or permanently, various pieces of data.

The processor may be operatively, functionally, and/or electrically connected to each of the components of the electronic device 401 to perform control and/or communication-related computation or data processing of each of the components. The operations performed by the processor may be stored in the memory and, when executed, may be executed by the instructions that cause the processor to operate.

Although there will be no limitation to the computation and data processing functions implemented by the processor on the electronic device 401, a series of operations related to an XR content service function will be described hereinafter. The operations of the processor to be described below may be performed by executing the instructions stored in the memory.

According to an embodiment, the processor may generate a virtual object based on virtual information based on image information. The processor may output a virtual object related to an XR service along with background spatial information through the display 421. For example, the processor may obtain image information by capturing an image related to a real space corresponding to an FOV of the user wearing the electronic device 401 through the second function cameras 411 and 412 or may generate a virtual space of a virtual environment. For example, the processor may perform control to display, on the display 421, XR content (hereinafter, referred to as an XR content screen) that outputs at least one virtual object such that the at least one virtual object is visible overlapping in an FOV area or an area determined to be the FOV of the user.

According to an embodiment, the electronic device 401 may have a form factor to be worn on the head of the user. The electronic device 401 may further include a strap and/or a wearing member to be fixed on the body part of the user. The electronic device 401 may provide a VR, AR, and/or MR-based user experience while being worn on the head of the user.

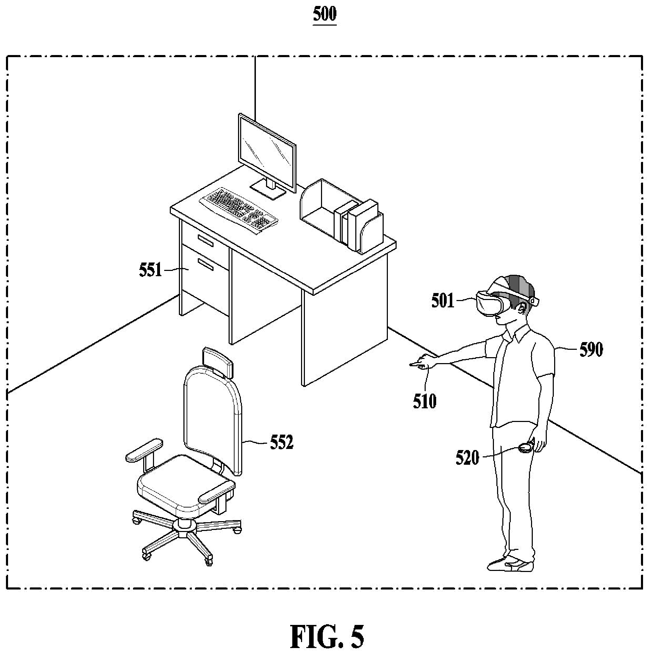

FIG. 5 illustrates an example of the construction of a virtual space and an input from and an output to a user in the virtual space, according to various embodiments.

An electronic device (e.g., the electronic device 101 of FIG. 1, the electronic device 201 of FIG. 2, the electronic device 301 of FIG. 3, and the electronic device 401 of FIG. 4) may obtain spatial information about a physical space in which sensors are located using the sensors. The spatial information may include a geographic location of the physical space in which the sensors are located, a size of the space, an appearance of the space, a position of a physical object 551 disposed in the space, a size of the physical object 551, an appearance of the physical object 551, and illuminant information. The appearance of the space and the physical object 551 may include at least one of a shape, a texture, or a color of the space and the physical object 551. The illuminant information, which is information about a light source that emits light acting in the physical space, may include at least one of an intensity, a direction, or a color of illumination. The sensors described above may collect information for providing AR. For example, in an AR device shown in FIGS. 2 to 4, the sensors may include a camera and a depth sensor. However, the sensors are not limited thereto, and the sensors may further include at least one of an infrared sensor, a depth sensor (e.g., a light detection and ranging (LiDAR) sensor, a radio detection and ranging (radar) sensor, or a stereo camera), a gyro sensor, an acceleration sensor, or a geomagnetic sensor.

An electronic device 501 may collect the spatial information over a plurality of time frames. For example, in each time frame, the electronic device 501 may collect information about a space of a portion belonging to a scene within a sensing range (e.g., an FOV) of a sensor at a position of the electronic device 501 in the physical space. The electronic device 501 may analyze the spatial information of the time frames to track a change (e.g., a position movement or state change) of an object over time. The electronic device 501 may integrally analyze the spatial information collected through the plurality of sensors to obtain integrated spatial information (e.g., an image obtained by spatially stitching scenes around the electronic device 501 in the physical space) of an integrated sensing range of the plurality of sensors.

According to an embodiment, the electronic device 501 may analyze the physical space as three-dimensional (3D) information, using various input signals (e.g., sensing data of an RGB camera, an infrared sensor, a depth sensor, or a stereo camera) of the sensors. For example, the electronic device 501 may analyze at least one of the shape, the size, or the position of the physical space, and the shape, the size, or the position of the physical object 551.

For example, the electronic device 501 may detect an object captured in a scene corresponding to an FOV of a camera, using sensing data (e.g., a captured image) of the camera. The electronic device 501 may determine a label of the physical object 551 (e.g., as information indicating classification of an object, including values indicating a chair, a monitor, or a plant) from a 2D scene image of the camera and an area (e.g., a bounding box) occupied by the physical object 551 in the 2D scene. Accordingly, the electronic device 501 may obtain 2D scene information from a position at which a user 590 is viewing. In addition, the electronic device 501 may also calculate a position of the electronic device 501 in the physical space based on the sensing data of the camera.

The electronic device 501 may obtain position information of the user 590 and depth information of a real space in a viewing direction, using sensing data (e.g., depth data) of a depth sensor. The depth information, which is information indicating a distance from the depth sensor to each point, may be expressed in the form of a depth map. The electronic device 501 may analyze a distance in the unit of each pixel at a 3D position at which the user 590 is viewing.

The electronic device 501 may obtain information including a 3D point cloud and mesh using various pieces of sensing data. The electronic device 501 may obtain a plane, a mesh, or a 3D coordinate point cluster that configures the space by analyzing the physical space. The electronic device 501 may obtain a 3D point cloud representing physical objects based on the information obtained as described above.

The electronic device 501 may obtain information including at least one of 3D position coordinates, 3D shapes, or 3D sizes (e.g., 3D bounding boxes) of the physical objects arranged in the physical space by analyzing the physical space.

Accordingly, the electronic device 501 may obtain physical object information detected in the 3D space and semantic segmentation information about the 3D space. The physical object information may include at least one of a position, an appearance (e.g., a shape, texture, and color), or a size of the physical object 551 in the 3D space. The semantic segmentation information, which is information obtained by semantically segmenting the 3D space into subspaces, may include, for example, information indicating that the 3D space is segmented into an object and a background and information indicating that the background is segmented into a wall, a floor, and a ceiling. As described above, the electronic device 501 may obtain and store 3D information (e.g., spatial information) about the physical object 551 and the physical space. The electronic device 501 may store 3D position information of the user 590 in the space, along with the spatial information.

The electronic device 501 according to an embodiment may construct a virtual space 500 based on the physical positions of the electronic device 501 and/or the user 590. The electronic device 501 may generate the virtual space 500 by referring to the spatial information described above. The electronic device 501 may generate the virtual space 500 of the same scale as the physical space based on the spatial information and arrange objects in the generated virtual space 500. The electronic device 501 may provide a complete VR to the user 590 by outputting an image that substitutes the entire physical space. The electronic device 501 may provide MR or AR by outputting an image that substitutes a portion of the physical space. Although the construction of the virtual space 500 based on the spatial information obtained by the analysis of the physical space is described, the electronic device 501 may also construct the virtual space 500 irrespective of the physical position of the user 590. The virtual space 500 described herein may be a space corresponding to AR or VR and may also be referred to as a metaverse space.

For example, the electronic device 501 may provide a virtual graphic representation that substitutes at least a partial space of the physical space. The electronic device 501, which is an OST-based electronic device, may output the virtual graphic representation overlaid on a screen area corresponding to at least a partial space of a screen display portion. The electronic device 501, which is a VST-based electronic device, may output an image generated by substituting an image area corresponding to at least a partial space in a space image corresponding to a physical space rendered based on the spatial information with a virtual graphic representation. The electronic device 501 may substitute at least a portion of a background in the physical space with a virtual graphic representation, but embodiments are not limited thereto. The electronic device 501 may only additionally arrange a virtual object 552 in the virtual space 500 based on the spatial information, without changing the background.

The electronic device 501 may arrange and output the virtual object 552 in the virtual space 500. The electronic device 501 may set a manipulation area for the virtual object 552 in a space occupied by the virtual object 552 (e.g., a volume corresponding to an appearance of the virtual object 552). The manipulation area may be an area in which a manipulation of the virtual object 552 occurs. In addition, the electronic device 501 may substitute the physical object 551 with the virtual object 552 and output the virtual object 552. The virtual object 552 corresponding to the physical object 551 may have the same or similar shape as or to the corresponding physical object 551. However, embodiments are not limited thereto, and the electronic device 501 may set only the manipulation area in a space occupied by the physical object 551 or at a position corresponding to the physical object 551, without outputting the virtual object 552 that substitutes the physical object 551. That is, the electronic device 501 may transmit, to the user 590, visual information representing the physical object 551 (e.g., light reflected from the physical object 551 or an image obtained by capturing the physical object 551) as it is without a change, and set the manipulation area in the corresponding physical object 551. The manipulation area may be set to have the same shape and volume as the space occupied by the virtual object 552 or the physical object 551 but is not limited thereto. The electronic device 501 may set the manipulation area that is smaller than the space occupied by the virtual object 552 or the space occupied by the physical object 551.

According to an embodiment, the electronic device 501 may arrange the virtual object 552 (e.g., an avatar object) representing the user 590 in the virtual space 500. When the avatar object is provided in a first-person view, the electronic device 501 may provide a visualized graphic representation corresponding to a portion of the avatar object (e.g., a hand, a torso, or a leg) to the user 590 via the display described above (e.g., an OST display or a VST display). However, embodiments are not limited thereto, and when the avatar object is provided in a third-person view, the electronic device 501 may provide a visualized graphic representation corresponding to the entire shape (e.g., a back view) of the avatar object to the user 590 via the display described above. The electronic device 501 may provide the user 590 with an experience integrated with the avatar object.

In addition, the electronic device 501 may provide an avatar object of another user who enters the same virtual space 500. The electronic device 501 may receive feedback information that is the same as or similar to feedback information (e.g., information based on at least one of visual sensation, auditory sensation, or tactile sensation) provided to another electronic device 501 entering the same virtual space 500. For example, when an object is arranged in any virtual space 500 and a plurality of users access the virtual space 500, respective electronic devices 501 of the plurality of users 590 may receive feedback information (e.g., a graphic representation, a sound signal, or haptic feedback) of the same object arranged in the virtual space 500 and provide the feedback information to each user 590.

The electronic device 501 may detect an input to an avatar object of another electronic device 501 and may receive feedback information from the avatar object of the other electronic device 501. An exchange of inputs and feedback for each virtual space 500 may be performed by a server (e.g., the server 108 of FIG. 1). For example, the server (e.g., a server providing a metaverse space) may transfer, to the users 590, inputs and feedback between the avatar object of the user 590 and an avatar object of another user 590. However, embodiments are not limited thereto, and the electronic device 501 may establish direct communication with the other electronic device 501 to provide an input based on an avatar object or receive feedback, not via the server.

For example, based on detecting a user input that selects a manipulation area, the electronic device 501 may determine that the physical object 551 corresponding to the selected manipulation area is selected by the user 590. An input of the user 590 may include at least one of a gesture input made by using a body part (e.g., a hand or eye), an input made by using a separate VR accessory device, or a voice input of the user.

The gesture input may be an input corresponding to a gesture identified by tracking a body part 510 of the user 590 and may include, for example, an input indicating or selecting an object. The gesture input may include at least one of a gesture by which a body part (e.g., a hand) moves toward an object for a predetermined period of time or more, a gesture by which a body part (e.g., a finger, an eye, or a head) points at an object, or a gesture by which a body part and an object contact each other spatially. A gesture of pointing at an object with an eye may be identified based on ET. A gesture of pointing at an object with a head may be identified based on head tracking.

Tracking the body part 510 of the user 590 may be mainly performed based on a camera of the electronic device 501 but is not limited thereto. The electronic device 501 may track the body part 510 based on a cooperation of sensing data of a vision sensor (e.g., image data of a camera and depth data of a depth sensor) and information collected by accessory devices to be described below (e.g., controller tracking or finger tracking in a controller). Finger tracking may be performed by sensing a distance or contact between an individual finger and the controller based on a sensor (e.g., an infrared sensor) embedded in the controller.

VR accessory devices may include, for example, a ride-on device, a wearable device, a controller device 520, or other sensor-based devices. The ride-on device, which is a device operated by the user 590 riding thereon, may include, for example, at least one of a treadmill-type device or a chair-type device. The wearable device, which is a manipulation device worn on at least a part of the body of the user 590, may include, for example, at least one of a full body suit-type or a half body suit-type controller, a vest-type controller, a shoe-type controller, a bag-type controller, a glove-type controller (e.g., a haptic glove), or a face mask-type controller. The controller device 520 may include, for example, an input device (e.g., a stick-type controller or a firearm) manipulated by a hand, foot, toe, or other body parts 510.

The electronic device 501 may establish direct communication with an accessory device and track at least one of a position or motion of the accessory device, but embodiments are not limited thereto. The electronic device 501 may communicate with the accessory device via a base station for VR.

For example, the electronic device 501 may determine that the virtual object 552 is selected, based on detecting an act of gazing at the virtual object 552 for a predetermined period of time or more through eye gaze tracking technology described above. In another example, the electronic device 501 may recognize a gesture of pointing at the virtual object 552 through hand tracking technology. The electronic device 501 may determine that the virtual object 552 is selected, based on that a direction in which a tracked hand points indicates the virtual object 552 for a predetermined period of time or more or that a hand of the user 590 contacts or enters an area occupied by the virtual object 552 in the virtual space 500.

The voice input of the user, which is an input corresponding to a user's voice obtained by the electronic device 501, may be sensed by, for example, an input module (e.g., a microphone) of the electronic device 501 or may include voice data received from an external electronic device of the electronic device 501. By analyzing the voice input of the user, the electronic device 501 may determine that the physical object 551 or the virtual object 552 is selected. For example, based on detecting a keyword indicating at least one of the physical object 551 or the virtual object 552 from the voice input of the user, the electronic device 501 may determine that at least one of the physical object 551 or the virtual object 552 corresponding to the detected keyword is selected.

The electronic device 501 may provide feedback to be described below as a response to the input of the user 590 described above.

The feedback may include visual feedback, auditory feedback, tactile feedback, olfactory feedback, or gustatory feedback. The feedback may be rendered by the server 108, the electronic device 101, or the external electronic device 102 as described above with reference to FIG. 1.

The visual feedback may include an operation of outputting an image through the display (e.g., a transparent display or an opaque display) of the electronic device 501.

The auditory feedback may include an operation of outputting a sound through a speaker of the electronic device 501.

The tactile feedback may include force feedback that simulates a weight, a shape, a texture, a dimension, and dynamics. For example, the haptic glove may include a haptic element (e.g., an electric muscle) that simulates a sense of touch by tensing and relaxing the body of the user 590. The haptic element in the haptic glove may act as a tendon. The haptic glove may provide haptic feedback to the entire hand of the user 590. The electronic device 501 may provide feedback that represents a shape, a size, and stiffness of an object through the haptic glove. For example, the haptic glove may generate force that simulates a shape, a size, and stiffness of an object. The exoskeleton of the haptic glove (or a suit-type device) may include a sensor and a finger motion measurement device, may transfer cable-pulling force (e.g., an electromagnetic, direct current (DC) motor-based, or pneumatic force) to fingers of the user 590, and may thereby transmit tactile information to the body. Hardware that provides such tactile feedback may include a sensor, an actuator, a power source, and a wireless transmission circuit. The haptic glove may operate by inflating and deflating an inflatable air bladder on a surface of the glove.

Based on an object in the virtual space 500 being selected, the electronic device 501 may provide feedback to the user 590. For example, the electronic device 501 may output a graphic representation (e.g., a representation of highlighting the selected object) indicating the selected object through the display. For example, the electronic device 501 may output a sound (e.g., a voice) notifying the selected object through a speaker. In another example, the electronic device 501 may transmit an electrical signal to a haptic supporting accessory device (e.g., the haptic glove) and may thereby provide a haptic motion that simulates a tactile sensation of a corresponding object to the user 590.

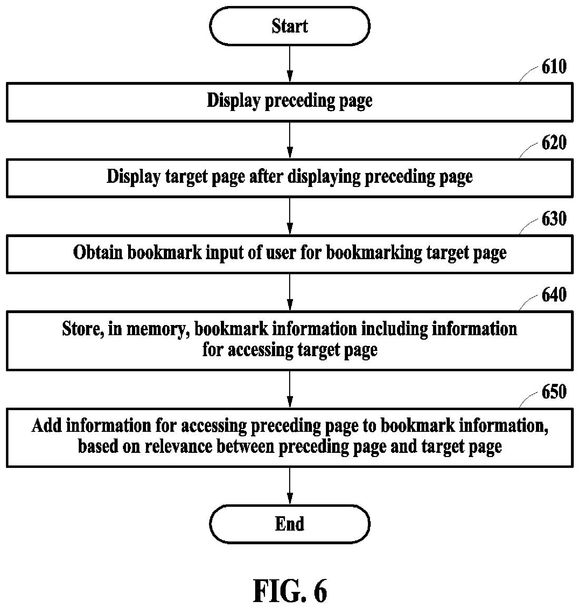

FIG. 6 is a diagram illustrating an example of a method of bookmarking a page, which is performed by an electronic device, according to various embodiments.

According to an embodiment, when obtaining a bookmark input for a page, an electronic device (e.g., the electronic device 101 of FIG. 1, the electronic device 201 of FIG. 2, the electronic device 301 of FIG. 3, the electronic device 401 of FIG. 4, and the electronic device 501 of FIG. 5) may store, in memory, bookmark information including information for accessing the page and information for accessing another page related to the page.

In various embodiments of the present disclosure, the page may include at least one of a web page or an application page.

According to an embodiment, the page may include a web page. The web page may be provided as a wired and/or wireless Internet page via an Internet protocol-based network (e.g., the network 199 or the server 108 of FIG. 1). The web page may have a uniform resource locator (URL) address for defining an access path. The web page may be implemented in the form of, for example, a hypertext markup language (HTML) document or an extensible markup language (XML) document. The web page may be part of a website that is a collection of interconnected web pages.

According to an embodiment, the page may correspond to a space (e.g., a virtual space) provided by an application (e.g., the application 146 of FIG. 1). For example, the page may include a page corresponding to a chat room provided by a messaging application. For example, the page may include a page corresponding to a cart provided by a shopping application.

In operation 610, the electronic device may display a preceding page.

In operation 620, the electronic device may display a target page after displaying the preceding page. According to an embodiment, the electronic device may display the preceding page and the target page on a display (e.g., the display module 160 of FIG. 1, the first display 205 of FIG. 2, the second display 210 of FIG. 2, the display 320 of FIG. 3, and the display 421 of FIG. 4).

The target page may refer to a page selected by a bookmark input of a user. The bookmark input is described in more detail in operation 630.

According to an embodiment, the preceding page may refer to a page displayed before the target page. In various embodiments of the present disclosure, "displaying the preceding page before the target page" may include the time point at which the display of the preceding page begins precedes the time point at which the display of the target page begins. Similarly, "displaying the target page after displaying the preceding page" may refer to the time point at which the display of the target page begins is subsequent to the time point at which the display of the preceding page begins.

For example, the electronic device may display the preceding page from a first time point, and then stop displaying the preceding page from a second time point that is the same as or subsequent to the first time point and display the target page.

For example, the electronic device may display the preceding page from the first time point and then display the target page from the second time point that is subsequent to the first time point. The electronic device may display the preceding page and the target page together at a third time point after the second time point. For example, when operating in a multi-window mode, the electronic device, at the third time point, may display the preceding page and the target page via respectively corresponding windows.

According to an embodiment, the preceding page may refer to a page corresponding to an operation preceding an operation corresponding to the target page. Each of the preceding page and the target page may correspond to at least some of a plurality of operations including a function. For example, the preceding page may be a page for performing a first operation among the plurality of operations. The target page may be a page for performing a second operation among the plurality of operations, which is subsequent to the first operation.

According to an embodiment, the preceding page may refer to a page in which an input of the user is obtained before the target page. For example, the input of the user obtained through the preceding page may precede an input of the user obtained through the target page. In various embodiments of the present disclosure, "the input of the user obtained through the preceding page preceding the input of the user obtained through the target page" may include that the time point of obtaining the input of the user obtained through the preceding page (e.g., an area corresponding to the preceding page) precedes the time point of obtaining the input of the user obtained through the target page. When inputs of a plurality of user are obtained from at least one of the preceding page or the target page, the electronic device may determine the preceding page based on a reference time point corresponding to each page. For example, the reference time point of the preceding page may precede the reference time point of the target page. The reference time point may represent the time point(s) at which at least one input of the user obtained through a corresponding page is obtained. For example, the reference time point may include at least one of the first time point at which the input of the user is obtained from a corresponding page or the last time point at which the input of the user is obtained from a corresponding page.

In operation 630, the electronic device may obtain the bookmark input of the user for bookmarking the target page.

In operation 640, the electronic device may store, in memory (e.g., the memory 130 of FIG. 1), bookmark information including information for accessing the target page.

The bookmark input may refer to an input of the user requesting to bookmark the target page. In various embodiments of the present disclosure, 'bookmarking a page' may refer to storing information about the page.

According to an embodiment, the input of the user (e.g., a bookmark input) may include at least one of a button input, a motion input, a gesture input, or a voice input.

The button input may refer to an input detected through a physical button included in the electronic device or an external device (e.g., the input module 150 of FIG. 1 and the controller device 520 of FIG. 5) that is communicatively connected to the electronic device. For example, the electronic device or the external device may include a button assigned to a bookmark function and may detect the bookmark input when detecting that a corresponding button is pressed.

The motion input may refer to a motion applied to the electronic device or the external device (e.g., the input module 150 of FIG. 1 and the controller device 520 of FIG. 5) that is communicatively connected to the electronic device. The motion input may include an input detected when the user rotates, tilts, and/or moves the electronic device or the external device. For example, a predetermined motion may be pre-assigned to the bookmark function, and the bookmark input may be detected when the electronic device or the external device detects that the predetermined motion occurs. For example, the predetermined motion may be predetermined to be a motion that moves from an area corresponding to the target page in a predetermined direction (e.g., a direction from bottom to top based on the posture of the electronic device).

The gesture input may refer to an input corresponding to a gesture identified based on tracking the body part (e.g., a finger, an eye, or a head) of the user. The gesture input may include a gesture input corresponding to a gesture of pointing and/or dragging an object with the body part of the user. For example, a predetermined gesture may be pre-assigned to the bookmark function, and the bookmark input may be detected when the electronic device or the external device detects that the predetermined gesture occurs. For example, the predetermined gesture may be predetermined to be a gesture of dragging an object from a point included in an area corresponding to the target page in a predetermined direction (e.g., a direction from bottom to top based on the posture of the electronic device) with the eye or finger of the user.

The voice input may refer to an input corresponding to a voice of the user obtained through the electronic device or the external device that is communicatively connected to the electronic device. The electronic device may analyze the voice input and determine whether the voice input of the user requests the bookmark for the target page. The electronic device may obtain the voice input as the bookmark input when the intent of the user identified based on the voice input of the user is to bookmark the target page.

According to an embodiment, the electronic device may obtain voice data corresponding to the voice of the user. The electronic device may analyze the voice data using a natural language platform. The natural language platform may include an automatic speech recognition (ASR) module and/or a natural language understanding (NLU) module.

For example, the ASR module may convert the voice input of the user into text data. The NLU module may use the text data of the voice input to identify the intent of the user. For example, the NLU module may perform syntactic analysis or semantic analysis to identify the intent of the user. In an embodiment, the NLU module may use linguistic features (e.g., grammatical elements) of morphemes or phrases to identify the meaning of words extracted from the voice input and to determine the intent of the user by matching the meaning of the identified words to the intent.

The bookmark input is not limited to including one of a button input, a motion input, a gesture input, or a voice input and may be an input of the user in which two or more of the button input, the motion input, the gesture input, or the voice input are combined. The input of the user in which two or more of the button input, the motion input, the gesture input, or the voice input are combined may also be expressed as a 'multimodal input.'

For example, the bookmark input may be a combined input of the gesture input (e.g., a gaze input) of pointing an area corresponding to the target page by the gaze of the user and the button input in which a physical button assigned to the bookmark function is pressed, among the physical buttons included in the electronic device and/or the external device (e.g., a controller).

For example, the bookmark input may include a target page designation input including the gaze input of pointing an area corresponding to the target page by the gaze of the user and a bookmark trigger input of bookmarking the target page designated by a predetermined gesture (e.g., a swipe gesture in a predetermined direction) by the body part (e.g., a finger) of the user.

The bookmark information may include information about the target page. The information about the page (e.g., the target page and the preceding page) may include information for accessing the page. For example, the information for accessing the page may include information for defining an access path to the page. The bookmark information may include information about the input of the user obtained through the target page.

For example, when the page is a web page, the bookmark information may include a URL address of the page. The information about the page may include at least one of a domain name of the page, a thumbnail, a title of the page, or an icon (e.g., a favicon) of the page.

For example, when the page is an application page, the bookmark information may include information for displaying the page. The information about the page may include at least one of information about an application or a server corresponding to the application, information about a user account, a thumbnail of the page, a title of the page, or an icon of the page. The user account may be created by subscribing to a service corresponding to the application, and the server may serve as a service platform that provides the service to the user account subscribed to the service.

In operation 650, the electronic device may add information for accessing the preceding page to the bookmark information, based on the relevance between the preceding page and the target page. The relevance between the preceding page and the target page may include whether the preceding page contributes to the display of the target page and/or the degree in which the display of the preceding page contributes to the display of the target page.

For example, the electronic device may determine (e.g., analyze) the relevance between the preceding page and the target page. When it is determined that the preceding page is related to the target page, the electronic device may add the information for accessing the preceding page to the bookmark information of the target page.

The electronic device, according to an embodiment, may determine that the preceding page is related to the target page, based on the similarity between content included in the preceding page and content included in the target page. The page (e.g., the preceding page and the target page) may include pieces of content. The pieces of content may include at least one of text, an image, a video (e.g., a plurality of image frames), or an interfacing object. The interfacing object, which is implemented to interact with the user, may include, for example, a button or icon implemented to be displayed in another content and/or another page in response to the input of the user.

The electronic device, according to an embodiment, may determine that the preceding page is related to the target page, based on whether the target page is accessible through the preceding page. For example, the electronic device may determine that the preceding page is related to the target page when the target page is linked to the content (e.g., an interfacing object) included in the preceding page. The linkage of the target page to the content included in the preceding page may include the target page being mapped to the content included in the preceding page, and information for defining an access path to the target page being accessible when an event related to the content included in the preceding page is detected (e.g., the input of the user is detected). For example, the preceding page may include a button for linking to the target page. The electronic device may display the target page when an input of the user for the button included in the preceding page is detected.

The electronic device may determine that a preceding page that is indirectly accessible to the target page from the preceding page by going through another preceding page is also related to the target page, along with a preceding page that is directly accessible to the target page. In various embodiments of the present disclosure, "being directly accessible to the target page through the preceding page" may refer to the content included in the preceding page being directly linked to the target page. Furthermore, in various embodiments of the present disclosure, "being indirectly accessible to the target page through the preceding page" may refer to the content included in the preceding page being linked to another preceding page and content included in another preceding page being linked to the target page.

The electronic device, according to an embodiment, may determine the relevance between the target page and the preceding page, based on information received from a server (e.g., the server 108 of FIG. 1) providing the target page. The electronic device may display the target page by transmitting, to the server, the information for accessing the target page and receiving, from the server, information for displaying the target page. The electronic device may further receive, from the server, information about the preceding page related to the target page, along with the information for displaying the target page. The electronic device may determine that the preceding page is related to the target page, based on the information about the preceding page received from the server.

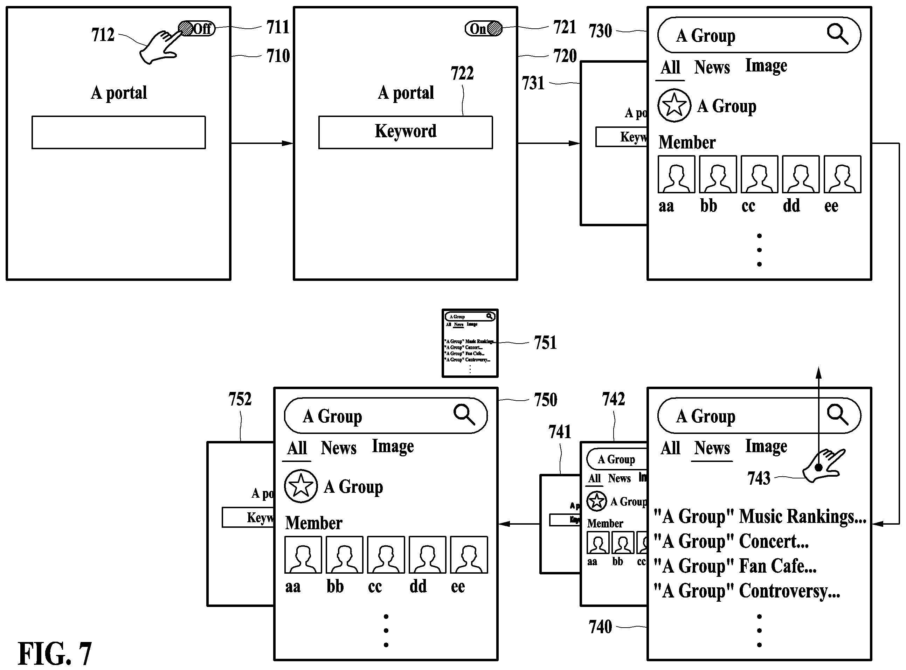

The electronic device, according to an embodiment, may receive a display command for the target page from the external device. When the display command for the target page is received from the external device, the electronic device may determine the relevance between the preceding page and the target page, based on at least one of the information received from the external device, the information determined by the electronic device, or the information received from the server providing a page. An embodiment in which the electronic device receives the display command for the target page from the external device is described in more detail below with reference to FIG. 7.

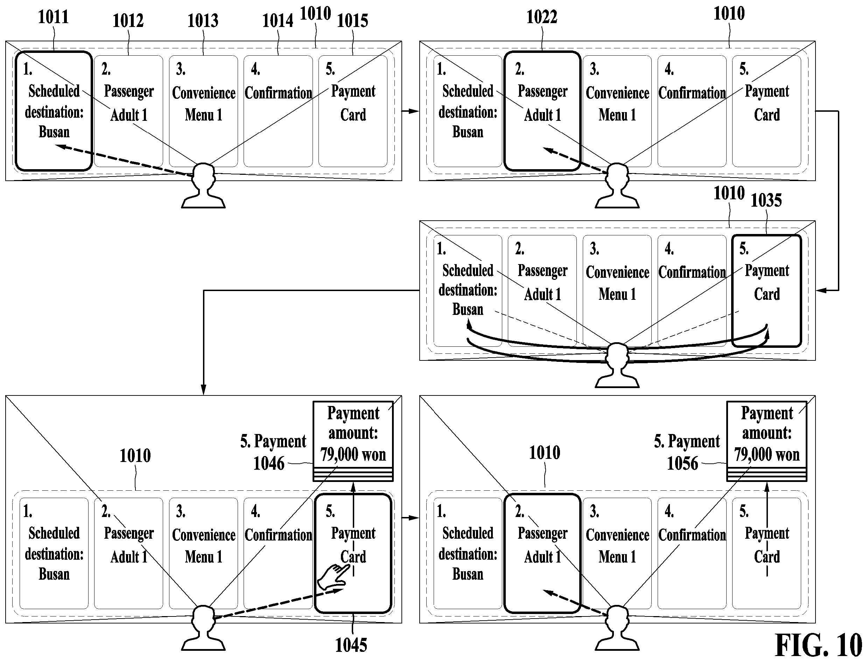

The electronic device, according to an embodiment, may determine the relevance between the preceding page and the target page, based on the preceding page and the target page corresponding to at least some of the plurality of operations including a function. An example of an operation of determining the relevance between the pages based on the plurality of operations including a function is described in more detail below with reference to FIG. 10.

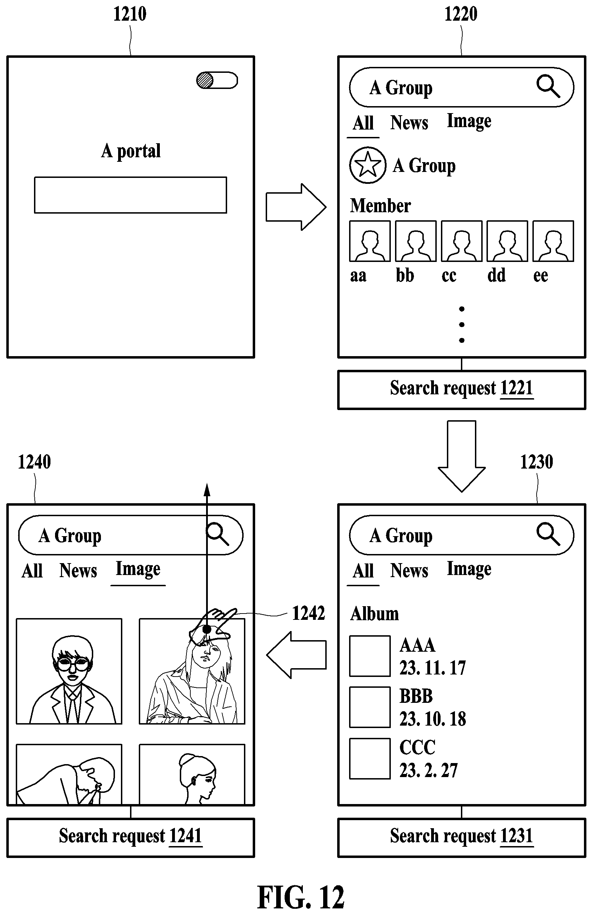

When each of the preceding page and the target page includes a search result for a corresponding search request, the electronic device, according to an embodiment, may determine the relevance between the preceding page and the target page based on the relevance between search requests corresponding to the preceding page and the target page. An example of an operation of determining the relevance between the pages based on the relevance between the search requests is described in more detail below with reference to FIG. 12.

The electronic device, according to an embodiment, may display a bookmark object indicating that the target page is bookmarked, based on storing the bookmark information. The bookmark object may include at least a portion of pieces of content included in the target page. The bookmark object may include representative content representing the pieces of content included in the target page. The representative content may be content selected from among the pieces of content included in the target page or content generated to summarize and/or describe the pieces of content included in the target page.

The electronic device may display the bookmark object in a partial area of a display area of the display. The display area may refer to an area displayed on the display of the electronic device. According to an embodiment, the display area may include an area determined to be an FOV of the user. The electronic device may determine, to be the display area, the area determined to be the FOV of the user among images obtained through an image-capturing camera (e.g., the third camera 245 of FIG. 2 and the second function cameras 411 and 412 of FIGS. 4A and 4B) and may display the determined display area on the display.

A partial area may be predetermined to be an area for displaying the bookmark object and/or determined by the electronic device to be an area for displaying the bookmark object based on the bookmark input.

The electronic device may display the preceding page and the target page based on obtaining the input of the user for the displayed bookmark object. For example, the electronic device may display the preceding page and the target page in response to the input of the user for selecting the displayed bookmark object. In the display area, at least a portion of a window corresponding to the preceding page may be placed to overlap at least a portion of a window corresponding to the target page. According to an embodiment, in the display area, in the overlapping area between the window corresponding to the preceding page and the window corresponding to the target page, the window corresponding to the target page may occlude the window corresponding to the preceding page.

According to various embodiments, the electronic device may include a first electronic device and a second electronic device. The first electronic device and the second electronic device may establish wired communication and/or wireless communication. The first electronic device may include a wearable device (e.g., an AR device, a VR device, an XR device, and a VST device) worn by the user, and the second electronic device (e.g., the electronic device 101 of FIG. 1) may include a mobile terminal (e.g., a tablet or a smartphone) of the user. At least some (e.g., operation 610, operation 620, and operation 630) of operations 610, 620, 630, 640, and 650 described above may be performed by the first electronic device, and the remaining operations (e.g., operation 640 and operation 650) may be performed by the second electronic device. From the perspective of the first electronic device, the second electronic device may be represented as an external device, and similarly, from the perspective of the second electronic device, the first electronic device may be represented as an external device.

FIG. 7 is a diagram illustrating an example of an operation in which an electronic device provides a display history of a page, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may display at least a portion of a preceding page together with a target page when displaying the target page after displaying the preceding page.

The electronic device may display a first page via a window 710. The electronic device may further display a display history object (e.g., a display history object having a first graphical representation 711) together with the first page via the window 710. The display history object may refer to a graphical object (e.g., an interfacing object) for switching whether a display history view is enabled.

The display history view may refer to an interface that visually represents the history of a page displayed by the electronic device. According to an embodiment, the display history view may be set for a window, and the electronic device may provide the interface that visually represents the page displayed via the window in which the display history view is enabled.

For example, the electronic device may display the preceding page via a default window (e.g. a reference window or a first window) and then display the target page via the default window. When the display history view is disabled, the electronic device may not generate an additional window (e.g., a second window) for the preceding page and/or may not display at least a portion of the preceding page. When the display history view is enabled, the electronic device may generate the additional window for the preceding page and display at least a portion of the preceding page via the generated additional window. The additional window and/or the preceding page displayed via the additional window may overlap the default window and/or the target page displayed via the default window. In the overlapping area, the additional window and/or the preceding page displayed via the additional window may be occluded by the default window and/or the target page displayed via the default window.

According to an embodiment, the display history object may have at least one of the first graphical representation 711 or a second graphical representation 721. For example, the first graphical representation 711 may indicate the disablement of the display history view, and the second graphical representation 721 may indicate the enablement of the display history view. The electronic device may perform switching between the enablement and the disablement of the display history view, based on obtaining an input of a user for the display history object.

For example, as shown in FIG. 7, the electronic device may display the first page via the first window 710 (e.g., a default window). When the display history view is disabled, the electronic device may display the display history object having the first graphical representation 711. The electronic device may obtain the input of the user for the display history object having the first graphical representation 711.

The electronic device may enable the display history view based on an input 712 of the user for the display history object. The electronic device may change the display of the display history object included in a first window 720 (e.g., a default window) from the first graphical representation 711 to the second graphical representation 721. The electronic device may obtain the input of the user through the first page corresponding to the first window 720. The input of the user may request the display of a page that is different from the first page. In FIG. 7, for example, the first page may be a page providing a search service, and the input of the user may include a search request including a search term.

Although not explicitly shown in FIG. 7, when the display history view is enabled, the electronic device may display the display history object having the second graphical representation 721. When an input 722 of the user for the display history object having the second graphical representation 721 is obtained, the electronic device may disable the display history view and change the display of the display history object from the second graphical representation 721 to the first graphical representation 711.

The electronic device may display a second page corresponding to the input 722 of the user via a first window 730 (e.g., a default window). In FIG. 7, for example, the second page may include a search result for a search request included in the input 722 of the user. Based on the display history view for the first window 730 being enabled, the electronic device may display at least a portion of the first page together with the second page via a second window 731 (e.g., a first additional window). As shown in FIG. 7, for example, the electronic device may display at least a portion of the first page via the second window 731, and at least a portion of the second window 731 may be occluded by at least a portion of the first window 730. The size of the second window 731 may be smaller than that of the first window 730. The electronic device may obtain an input of the user including an additional search request through the second page corresponding to the first window 730.

The electronic device may display a third page corresponding to the input of the user via a first window 740 (e.g., a default window). In FIG. 7, for example, the third page may include an additional search result for an additional search request included in the input of the user. Based on the display history view for the first window 740 being enabled, the electronic device may display at least a portion of the second page together with the third page via a third window 742 (e.g., a second additional window). For example, as shown in FIG. 7, based on the display history view being enabled, the electronic device may display at least a portion of the first page and at least a portion of the second page, which are displayed via the first window 740 (e.g., a default window), via a second window 741 (e.g., a first additional window) and the third window 742 (e.g., a second additional window), respectively.

The electronic device, according to an embodiment, may determine the sizes of the windows corresponding to the pages based on the order displayed via the first window 740. For example, the electronic device may determine the size of a window (e.g., the second window 741) corresponding to a page (e.g., a first page) displayed first via the first window 740 to be smaller than or equal to the size of a window (e.g., the third window 742) corresponding to a page (e.g., a second page) displayed later via the first window 740.

When the third page is displayed via the first window 740, the electronic device may obtain a bookmark input 743 for the third page. In FIG. 7, the bookmark input 743 may be obtained through a motion or gesture of dragging a page (e.g. a third page) from a point included in an area corresponding to the third page or the first window 740 to a point outside the area corresponding to the third page or the first window 740. When the bookmark input 743 is obtained, the electronic device may process the third page designated by the bookmark input 743 as the target page.

The electronic device may store, in memory, bookmark information including information for accessing the third page, based on the bookmark input 743. The electronic device may add information for accessing other pages (e.g., information for accessing a first page and information for accessing a second page) to the bookmark information, based on the relevance between the third page and other pages (e.g., a first page and a second page).

The electronic device, according to an embodiment, may determine that the preceding page is related to the target page, based on the display history view. For example, the electronic device may obtain the bookmark input 743 for the target page displayed via the default window. When at least a portion of the preceding page is displayed together with the target page based on the enablement of the display history view for the default window, the electronic device may determine that the preceding page is related to the target page. The electronic device may add information for accessing the preceding page to bookmark information of the target page.

The electronic device may display a bookmark object 751 for the third page based on storing the bookmark information. According to an embodiment, the bookmark object 751 may have a first bookmark representation (e.g., a graphical representation of the bookmark object 751 shown in FIG. 7) when the bookmark information further includes the information for accessing the preceding page together with information for accessing the target page. The bookmark object 751 may have a second bookmark representation when the bookmark information includes the information for accessing the target page and does not include the information about the preceding page. Each of the first bookmark representation and the second bookmark representation may be a different graphical representation that the bookmark object 751 may have, and the first bookmark representation may include a stacked form of a plurality of windows, and the second bookmark representation may include a single window form.

The electronic device may change a page displayed via a first window 750 (e.g., a default window) to the preceding page, based on storing the bookmark information. The electronic device may display, via the first window 750, the second page last displayed before the third page is displayed. According to an embodiment, when the change of the page displayed via the first window 750 is performed based on a bookmark function (e.g., obtaining of a bookmark input and storing of bookmark information), the electronic device may apply a bookmarked page to the display history view as the preceding page, thereby limiting the display of at least a portion of the bookmarked page.

For example, when the electronic device stores bookmark information on the third page and changes the page displayed via the first window 750 from the third page to the second page, the electronic device may skip the generation of an additional window for the third page and the display of at least a portion of the third page. The electronic device may stop displaying an additional window (e.g., the third window 742) for a preceding page (e.g., a second page) to be displayed via the first window 750 and may display the preceding page via the first window 750. When there is a preceding page (e.g., a first page) that is different from the preceding page to be displayed via the first window 750, the electronic device may maintain displaying at least a portion of the other preceding page via an additional window (e.g., a second window 752) for the other preceding page. For example, as shown in FIG. 7, the electronic device may display the second page via the first window 750 and display at least a portion of the first page via the second window 752. The electronic device may display an interface before the third page is displayed (e.g., an interface displaying the second page via the first window 730 and displaying at least a portion of the first page via the second window 731), based on the third page being bookmarked.

However, embodiments are not limited thereto, even when the third page is bookmarked, the electronic device may generate the additional window for the third page and display at least a portion of the third page together with the current page (e.g., a second page displayed via the first window 750 of FIG. 7), based on the display history view for the first window 750 being enabled.

The electronic device, according to various embodiments of the present disclosure, is not limited to changing the page displayed via the default window to the preceding page, based on storing the bookmark information. According to an embodiment, the electronic device may maintain displaying the third page via the first window 750 after storing the bookmark information or may display a page (e.g., a page set as a default page) other than the first page, the second page, and the third page.

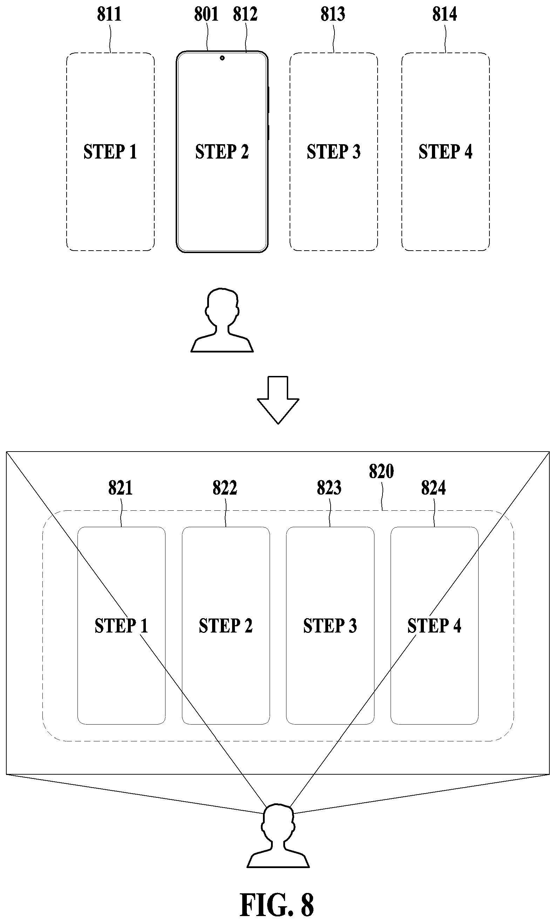

FIG. 8 is a diagram illustrating an example of an operation in which an electronic device displays a target page when a display command for the target page is received from an external device, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may receive the display command for the target page from an external device (e.g., the electronic device 102 of FIG. 1 and the electronic device 104 of FIG. 1). The external device may be connected to the electronic device via wired and/or wireless communication. For example, the external device may include at least a portion of the configuration of the electronic device 101 of FIG. 1.

When the display command for the target page is received from the external device, the electronic device may determine another page (e.g., a preceding page) to be displayed together with the target page. According to an embodiment, a display of the electronic device may include a first display (e.g., the first display 205 of FIG. 2) that outputs a right image corresponding to the right eye of a user and a second display (e.g., the second display 210 of FIG. 2) that outputs a left image corresponding to the left eye of the user. The electronic device may display a page via a window placed in a virtual space (e.g., the virtual space 500 of FIG. 5). When the preceding page is displayed together with the target page, the electronic device may display the target page and the preceding page via arranged windows in the virtual space. For example, a window corresponding to the target page and a window corresponding to the preceding page in the virtual space may be arranged to have the same height and/or size.

However, the electronic device, according to an embodiment, is not limited to providing the user with an image rendering the virtual space, and the electronic device may also display one or more pages on a single display.

The electronic device, according to an embodiment, may further display the target page together with the preceding page, based on the relevance between the target page and the preceding page displayed before the target page in the external device.

For example, the electronic device may receive the display command for the target page from the external device that displays the target page after displaying the preceding page. The electronic device may display the target page based on the display command. The electronic device may further display the preceding page together with the target page, based on the relevance between the preceding page and the target page. The preceding page may include the page displayed by the external device, even when the page is not displayed by the electronic device. The electronic device may determine the relevance between the preceding page and the target page.

As described above with reference to FIG. 6, the electronic device may determine the relevance between the preceding page and the target page, based on at least one of the similarity between pieces of content included in the preceding page and the target page, whether the target page is accessible through the preceding page, whether the preceding page and the target page correspond to at least some of a plurality of operations including a function, or the relevance between search requests.

The electronic device, according to an embodiment, may determine the relevance between the target page and the preceding page based on information received from a server providing the target page.

For example, the electronic device may receive the display command for the target page from the external device that displays the target page. The electronic device may display the target page based on the display command. The electronic device may display the target page via the window placed in the virtual space. The electronic device may receive, from a server (e.g., the server 108 of FIG. 1) providing the target page, information about the preceding page that is as a page related to the target page. The electronic device may further display the preceding page based on receiving the information about the preceding page. Based on receiving the information about the preceding page, the electronic device may further display the preceding page together with the target page via the arranged windows in the virtual space. The information about the preceding page may include information for accessing the preceding page. For example, the server may transmit, to the electronic device, a display command for further displaying the preceding page together with the target page. When the display command for further displaying the preceding page together with the target page is received from the server, the electronic device may determine that the preceding page is related to the target page and further display the preceding page.

According to an embodiment, when a bookmark input for the target page is obtained, even when the preceding page is not directly displayed by the electronic device, when the preceding page is displayed by the external device, the electronic device may determine the relevance between the preceding page and the target page. When it is determined that the preceding page is related to the target page, the electronic device may add the information for accessing the preceding page to bookmark information of the target page.

According to an embodiment, the electronic device may determine the relevance between the target page and the preceding page based on the external device simultaneously displaying the target page and the preceding page on a divided screen.

For example, the electronic device may receive, from the external device that simultaneously displays the preceding page and the target page, the display command for the preceding page and the target page via respectively corresponding windows. The electronic device may display, on the display, the preceding page and the target page via the arranged windows in the virtual space. The electronic device may determine whether the preceding page displayed simultaneously with the target page exists, based on obtaining the bookmark input for the target page. The electronic device may determine whether each of the preceding page and the target page includes a search result for a search request corresponding to a corresponding page, based on the existence of the preceding page displayed simultaneously with the target page by the external device. For example, the electronic device may determine whether the preceding page includes a search result for a search request corresponding to the preceding page and whether the target page includes a search result for a search request corresponding to the target page. The electronic device may determine that the preceding page is related to the target page, based on the preceding page and the target page including the search result. For example, when the bookmark input for the target page is obtained, the electronic device may store bookmark information including information for accessing the target page. The electronic device may add the information for accessing the preceding page to the bookmark information, based on the existence of the preceding page displayed together with the target page by the external device and the preceding page and the target page including the search result.

Referring to FIG. 8, an external device 801 may display a second page 812 after displaying a first page 811. According to an embodiment, a plurality of pages may correspond to at least some of a plurality of operations including a function. For example, a first operation (represented as STEP 1 in FIG. 8), a second operation (represented as STEP 2 in FIG. 8), a third operation (represented as STEP 3 in FIG. 8), and a fourth operation (represented as STEP 4 in FIG. 8) may include a function. The first operation may correspond to the first page 811. The second operation may correspond to the second page 812. The third operation may correspond to a third page 813. The fourth operation may correspond to a fourth page 814.

The external device 810 may transmit a display command for the second page 812 to an electronic device (not shown). The electronic device may receive a display command for a second page 822. The electronic device may display the second page 822 on a screen 820. For example, the electronic device may display the second page 822 via the window placed in the virtual space. The electronic device may further display, on the screen 820, a first page 821 together with the second page 822 via the arranged windows in the virtual space, based on the relevance between the first page 821 and the second page 822.

In various embodiments of the present disclosure, it is mainly described that the electronic device further displays and/or bookmarks the preceding page preceding the target page, together with the target page, but embodiments are not limited thereto. Based on the information determined by the electronic device or the information received from the server, the electronic device may determine the relevance between the target page and a subsequent page and may further display and/or bookmark the subsequent page of the target page when the subsequent page is related to the target page. The subsequent page may refer to a page displayed later than the target page. The subsequent page may refer to a page corresponding to an operation that is subsequent to an operation corresponding to the target page. The operation of determining the relevance between the target page and the subsequent page may be performed similarly to the operation of determining the relevance between the target page and the preceding page. For example, the relevance between the target page and the subsequent page may be determined based on at least one of the similarity between pieces of content included in the target page and the subsequent page, whether the subsequent page is accessible through the target page, whether the target page and the subsequent page correspond to at least some of the plurality of operations including a function, the relevance between search requests, or the information received from the server providing the target page and/or the subsequent page.

As shown in FIG. 8, for example, the electronic device may further display, on the screen 820, a subsequent page (e.g., a third page 823 and a fourth page 824) related to the second page 822, together with the second page 822.

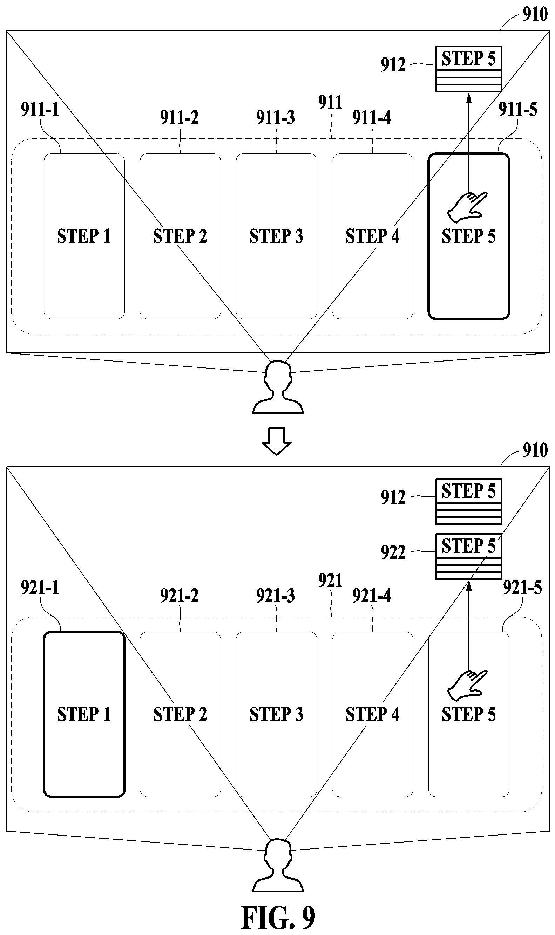

FIG. 9 illustrates an example of an operation in which an electronic device re-performs a corresponding function after bookmarking a page for at least some of a plurality of operations including a function, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may display pages corresponding to the plurality of operations including a function.

For example, a first operation (represented as STEP 1 in FIG. 9), a second operation (represented as STEP 2 in FIG. 9), a third operation (represented as STEP 3 in FIG. 9), a fourth operation (represented as STEP 4 in FIG. 9), and a fifth operation (represented as STEP 5 in FIG. 9) may include a function. The first operation may correspond to a first page 911-1. The second operation may correspond to a second page 911-2. The third operation may correspond to a third page 911-3. The fourth operation may correspond to a fourth page 911-4. The fifth operation may correspond to a fifth page 911-5.

The electronic device. according to an embodiment, may display a page (e.g., a target page and a preceding page) via a window placed in a virtual space (e.g., the virtual space 500 of FIG. 5). The electronic device may place a window corresponding to the page in a board area 911 (hereinafter, also referred to as a "board 911") placed in the virtual space. The board 911 may refer to a space where primary content to be provided to a user is placed. The board 911 may be set as a 2D flat area in the virtual space, for example. The board 911 may be maintained even when the gaze of the user and/or the heading direction of the user (or the electronic device) changes. However, the board 911 is not limited to being placed in a fixed position and/or posture in the virtual space, and the board 911 may change its position and/or posture in the virtual space based on an input of the user.

According to an embodiment, a display area 910 of the electronic device may be divided into a first area and a second area.

The first area, which corresponds to the board 911 in the virtual space, may refer to, among the display areas of a display, an area where the board 911 is displayed. The second area may refer to, among the display areas of the display, an area that is different from the first area. For example, the second area may be, among the display areas of the display, a remaining area of the first area. According to an embodiment, the electronic device may display the primary content to be provided to the user in the first area and display supplementary content to be provided to the user in the second area. The distinction between the primary content and the supplementary content may be performed by the user and/or the electronic device. In various embodiments of the present disclosure, the primary content may include a preceding page and/or a target page, and the supplementary content may include a bookmark object 912.

However, the electronic device is not limited to displaying the page via the window placed in the virtual space. For example, the electronic device may include the display and may determine, to be the board area 911, a partial area of the display among the display areas (e.g., the display area 910 and a display area 920) of the display.

Referring to FIG. 9, the electronic device may display a plurality of pages (e.g., the first page 911-1, the second page 911-2, the third page 911-3, the fourth page 911-4, and the fifth page 911-5) in the first area 911.

When displaying the pages corresponding to the plurality of operations including a function, the electronic device may apply a visual effect that distinguishes the current page corresponding to the currently performed operation from other pages. For example, in FIG. 9, the current page, which is the fifth page 911-5, may be displayed through a window that is larger than that of other pages (e.g., the first page 911-1, the second page 911-2, the third page 911-3, and the fourth page 911-4). The border of the current page may be displayed with a different type of line from the boundaries of other pages. For example, the border of the current page may be displayed with a thicker line than the boundaries of other pages.

The electronic device may obtain a bookmark input for the fifth page 911-5. The electronic device may store bookmark information including information for accessing the fifth page 911-5 by using the fifth page 911-5 as the target page. The electronic device may add information for accessing the preceding page to the bookmark information, based on the relevance between the target page (e.g., the fifth page 911-5) and the preceding page (e.g., the first page 911-1, the second page 911-2, the third page 911-3, and the fourth page 911-4). For example, the electronic device may determine that the first page 911-1, the second page 911-2, the third page 911-3, and the fourth page 911-4 are related to the fifth page 911-5, based on the first page 911-1, the second page 911-2, the third page 911-3, the fourth page 911-4, and the fifth page 911-5 respectively corresponding to the plurality of operations including a function. The electronic device may display the bookmark object 912 in an area that is different from the first area 911, based on storing the bookmark information. The bookmark object 912 may include a graphical representation ('STEP 5' in FIG. 9) indicating the fifth page 911-5 corresponding to the fifth operation.

The electronic device may re-perform the function based on bookmarking the page corresponding to at least some of the plurality of operations including a function. For example, in FIG. 9, based on bookmarking the fifth page 911-5, the electronic device may display a first page 921-1, a second page 921-2, a third page 921-3, a fourth page 921-4, and a fifth page 921-5 to re-perform the function. The electronic device may perform the first operation corresponding to the first page 921-1. The electronic device may display the first page 921-1 as the current page by applying a visual effect that distinguishes the first page 921-1 from other pages. As shown in FIG. 9, the electronic device may display the first page 921-1, the second page 921-2, the third page 921-3, the fourth page 921-4, and the fifth page 921-5 in a first area 921 of the display area 910 and may display the bookmark object 912 in an area that is different from the first area 921.

The electronic device may store bookmark information on the plurality of pages and display a plurality of bookmark objects. For example, as shown in FIG. 9, after re-performing the function, the electronic device may obtain a bookmark input for the fifth page 921-5. The electronic device may store bookmark information including information for accessing the fifth page 921-5 by using the fifth page 921-5 as the target page. The electronic device may add the information for accessing the preceding page to the bookmark information. For example, the electronic device may add, to the bookmark information, information for the first page 921-1, the second page 921-2, the third page 921-3, and the fourth page 921-4 to access the fifth page 921-5. The electronic device may display a bookmark object 922 in an area that is different from the first area 911, based on storing the bookmark information. The bookmark object 922 may include a graphical representation ('STEP 5' in FIG. 9) indicating the fifth page 921-5 corresponding to the fifth operation.

FIG. 10 is a diagram illustrating an example of an operation in which an electronic device performs a plurality of operations including a function, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may perform the plurality of operations including a function.

For example, in FIG. 10, a first operation (e.g., a schedule selection operation), a second operation (e.g., a passenger information input operation), a third operation (e.g., a convenience facility selection operation), a fourth operation (e.g., an input information confirmation operation), and a fifth operation (e.g., a payment information input operation) may form a train reservation function.

The plurality of operations may respectively correspond to a plurality of pages. For example, the first operation may correspond to a first page (e.g., a first page 1011), the second operation may correspond to a second page (e.g., a second page 1012), the third operation may correspond to a third page (e.g., a third page 1013), the fourth operation may correspond to a fourth page (e.g., a fourth page 1014), and the fifth operation may correspond to a fifth page (e.g., a fifth page 1015).

According to an embodiment, the electronic device may receive, from a server providing the plurality of pages, information indicating that the plurality of pages corresponds to at least some of the plurality of operations including a function. Based on the information received from the server, the electronic device may determine that the plurality of pages performs at least some of the plurality of operations including a function. In FIG. 10, for example, the electronic device may receive, from a server providing the train reservation function, information indicating that the first to fifth pages correspond to at least some of the plurality of operations including the train reservation function.

According to an embodiment, the electronic device may determine that one page and another page correspond to at least some of the plurality of operations including a function, based on content included in the other page being determined based on an input of a user that is input from one page. In FIG. 10, for example, the electronic device may determine that the first to fifth pages correspond to at least some of the plurality of operations including a function, based on an input of the user that is input from the first page (e.g., an input of the user specifying a departure point and an input of the user specifying a destination) being necessary for determining content of the fifth page (e.g., a payment amount).

According to an embodiment, when obtaining a bookmark input for a target page among the pages corresponding to the plurality of operations including a function, the electronic device may determine the relevance between the pages based on the operations performed in the pages.

For example, the electronic device may display a preceding page. The electronic device may obtain an input of the user from the preceding page. The electronic device may perform the first operation among the plurality of operations including a function, based on the input of the user obtained from the preceding page. The electronic device may display the target page. Following the first operation, the electronic device may perform the second operation based on an input of the user obtained from the target page. The electronic device may obtain a bookmark input for the target page. The electronic device may determine that the preceding page is related to the target page, based on the target page including content determined according to the performance result of the first operation and the input of the user obtained through the target page performing the second operation among the plurality of operations. The electronic device may add information for accessing the preceding page to bookmark information.

Referring to FIG. 10, for example, the electronic device may display, to provide a function (e.g., a train reservation function), the pages corresponding to the plurality of operations including a function. The electronic device may display, on a board area 1010, the first page 1011, the second page 1012, the third page 1013, the fourth page 1014, and the fifth page 1015. The electronic device may perform the first operation (e.g., a schedule selection operation) that is the most preceding among the plurality of operations. The electronic device may display, on the board area 1010, the first page 1011 as the current page corresponding to the currently performed operation (e.g., the first operation) by applying a visual effect that distinguishes the first page 1011 from the remaining pages.

After completing the first operation, the electronic device may perform the second operation (e.g., a passenger information input operation) that is subsequent to the first operation. The electronic device may display, on the board area 1010, a second page 1022 as the current page corresponding to the currently performed operation (e.g., the second operation) by applying a visual effect that distinguishes the second page 1022 from the remaining pages.

The electronic device may perform the fifth operation (e.g., a payment information input operation) after completing the first operation, the second operation, the third operation, and the fourth operation. The electronic device may display, on the board area 1010, a fifth page 1035 as the current page corresponding to the currently performed operation (e.g., the fifth operation) by applying a visual effect that distinguishes the fifth page 1035 from the remaining pages. By displaying the first page to the fifth page 1035 together on the board area 1010, the electronic device may also provide the input of the user obtained from the first operation, the second operation, the third operation, and/or the fourth operation, in addition to the input of the user that is input in relation to the fifth operation.

The electronic device may obtain a bookmark input for a fifth page 1045 displayed on the board area 1010. The electronic device may store bookmark information including information for accessing the fifth page 1045 and/or information about the input of the user obtained from the fifth page and may display a bookmark object 1046 in an area that is different from the board area 1010. The electronic device may add information for accessing other pages to the bookmark information, based on determining that other pages (e.g., the first page, the second page, the third page, and the fourth page) are related to the fifth page 1045.

The electronic device may re-perform the function in the board area 1010 after bookmarking the fifth page. The electronic device may display the first to fifth pages for re-performing the function, while displaying a bookmark object 1056. When re-performing the function, when an input for the bookmark object 1056 is detected, the electronic device may display at least a portion of the bookmark information. For example, when an input of the user for the bookmark object 1056 is detected, the electronic device may display the performance result of at least some of the first to fifth operations performed through at least some of the first to fifth pages.

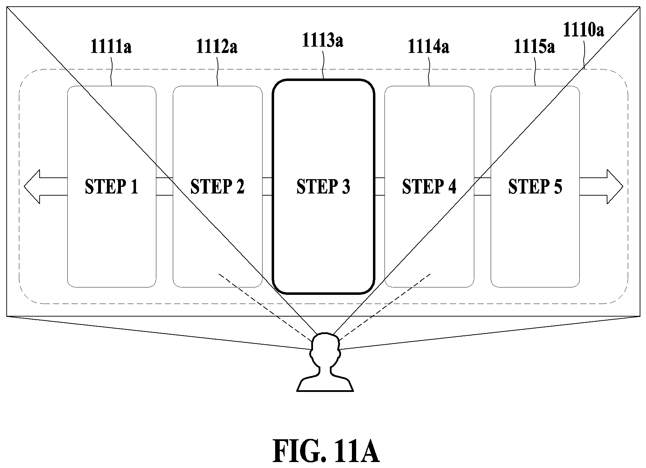

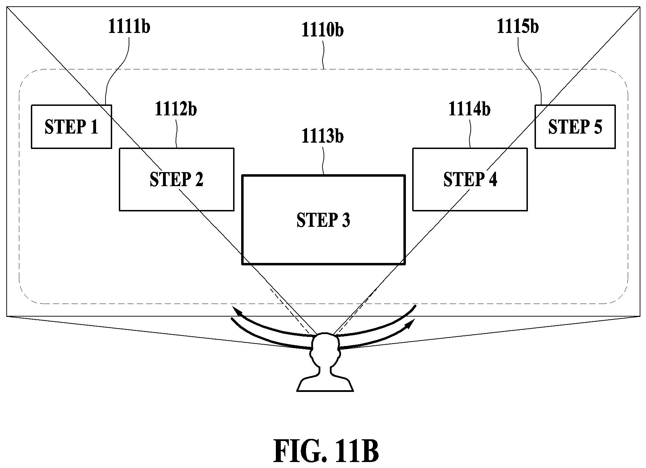

FIGS. 11A and 11B illustrate an exemplary interface of an operation of displaying a plurality of pages together, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may display a plurality of pages corresponding to a plurality of operations including a function.

The electronic device may display a plurality of pages (e.g., a first page, a second page, a third page, a fourth page, and a fifth page). The plurality of pages may respectively correspond to the plurality of operations, and the plurality of operations may include a function.

The electronic device may display a page (e.g., a current page) corresponding to the currently performed operation by applying a visual effect that distinguishes the page from other pages.

For example, the size of a window corresponding to the current page may be larger than that of a window corresponding to another page.

For example, the border of the window corresponding to the current page may be displayed with a different type of line from the border of the window corresponding to the other page. For example, the border of the window corresponding to the other page may be displayed with a dashed line, while the border of the window corresponding to the current page may be displayed with a solid line. For example, the border of the window corresponding to the other page may be displayed with a thinner line than the border of the window corresponding to the current page.

For example, the window corresponding to the current page may be placed at a preset position. The preset position may be a position determined to be an area with high accessibility in consideration of a user. For example, the preset position may be a center of a display area (or a board area) of a display or a position that is adjacent to the center.

For example, as shown in FIG. 11A, the electronic device may display, among the plurality of operations in a board area 1110a, a third page 1113a corresponding to the currently performed operation (e.g., a third operation) by applying a visual effect that distinguishes the third page 1113a from other pages (e.g., a first page 1111a, a second page 1112a, a fourth page 1114a, and a fifth page 1115a).

For example, as shown in FIG. 11B, the electronic device may display, among the plurality of operations in a board area 1110b, a third page 1113b corresponding to the currently performed operation (e.g., a third operation) by applying a visual effect that distinguishes the third page 1113b from other pages (e.g., a first page 1111b, a second page 1112b, a fourth page 1114b, and a fifth page 1115b). The electronic device may place, among the plurality of pages, the current page so that the current page is emphasized, using the sense of space.

FIG. 12 is a diagram illustrating an example of an operation in which an electronic device determines a relevance between search screens based on a relevance between search requests, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may display a page including a search result for a search request. When each of a preceding page and a target page includes the search result for the search request, the electronic device may determine the relevance between the pages based on the relevance between the search requests.

The search request may be generated based on an input of a user. The search request may include text (e.g., a search term), an image (e.g., a search image), or a search option. The search option may refer to an option determined by the user among a plurality of predetermined candidate options. For example, the plurality of candidate options may respectively correspond to 'registered within 1 day,' 'registered within 7 days,' and 'registered within 30 days,' and the search option may be determined to be 'registered within 30 days' based on the input of the user.

For example, the electronic device may obtain the input of the user. The electronic device may display a preceding page including a search result for a preceding search request generated based on the input of the user.

The electronic device may obtain another input of the user after displaying the preceding page. The electronic device may display a target page including a search result for a target search request generated based on the other input of the user.

The electronic device may obtain a bookmark input for the target page. The electronic device may determine the relevance between the target page and the preceding page. For example, the electronic device may determine whether to add information about the preceding page based on the relevance between the preceding search request and the target search request. The electronic device may determine the relevance between the target page and the preceding page based on the relevance between the preceding search request and the target search request. When it is determined that the preceding page is related to the target page, the electronic device may add information for accessing the preceding page to bookmark information of the target page.

The electronic device may determine the relevance between the preceding search request and the target search request.

When each of the preceding search request and the target search request includes a search term, the electronic device may determine the similarity score between the search terms. For example, the electronic device may determine the similarity score between the search requests based on words commonly included in the search terms. For example, the electronic device may determine, to be a higher score, the similarity score between the preceding search request and the target search request as the number of words commonly included in the preceding search request and the target search request increases. For example, the electronic device may determine the similarity score between the search terms using a search term similarity determination model. The search term similarity determination model may be implemented based on a machine learning model (e.g., a neural network). The search term similarity determination model may include a model generated and/or trained for outputting output data including the similarity score indicating the similarity between the search terms by applying the model to input data based on the search terms.

The electronic device may determine the similarity score between search images when each of the preceding search request and the target search request includes a search image. For example, the electronic device may determine the similarity score between the search images using a search image similarity determination model. The search image similarity determination model may be implemented based on a machine learning model (e.g., a neural network). The search image similarity determination model may include a model generated and/or trained for outputting output data including the similarity score indicating the similarity between the search images by applying the model to input data based on the search images.

For example, referring to FIG. 12, the electronic device may display a first page 1210 providing a search service. The electronic device may obtain an input of the user through the first page 1210. Based on the input of the user obtained from the first page 1210, the electronic device may generate a search request 1221 including a search term.

The electronic device may display a second page 1220 including a search result for the search request 1221. The electronic device may obtain an input of the user when displaying the second page 1220. The electronic device may generate a search request 1231 based on the input of the user obtained when displaying the second page 1220.

The electronic device may display a third page 1230 including a search result for the search request 1231. The electronic device may obtain an input of the user when displaying the third page 1230. The electronic device may generate a search request 1241 based on the input of the user obtained when displaying the third page 1230.

The electronic device may display a fourth page 1240 including a search result for the search request 1241. The electronic device may obtain a bookmark input 1242 for the fourth page 1240. Based on the fourth page 1240 including the search result for the search request 1241, the electronic device may determine the relevance between other pages (e.g., the second page 1220 and the third page 1230), which include the search result, and the fourth page 1240, using the relevance between the search requests. For example, the electronic device may determine the relevance between the second page 1220 and the fourth page 1240 based on the relevance between the search request 1221 and the search request 1241. For example, the electronic device may determine the relevance between the third page 1230 and the fourth page 1240 based on the relevance between the search request 1231 and the search request 1241.

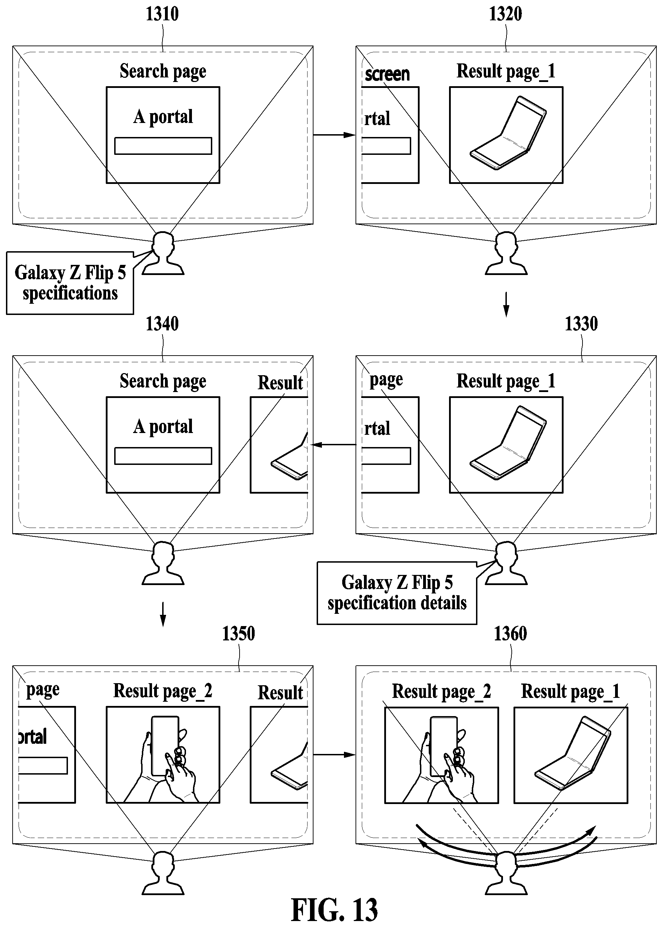

FIG. 13 is a diagram illustrating an example of an operation in which an electronic device provides an interface for comparing a plurality of pages, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to the embodiment, may provide the interface for comparing the plurality of pages. At least one of the plurality of pages may be a bookmarked page.

Referring to FIG. 13, the electronic device may display, on a screen 1310, a search page including a search screen. The search page may refer to a page providing a search service. According to an embodiment, the electronic device may determine a page to be the search page by receiving, from a server providing the search page, information indicating that the page is the search page. The electronic device may store a list of search pages classified and/or registered as search pages, and when the page is included in the list of search pages, the electronic device may determine the page to be the search page.

The electronic device may obtain an input of a user through the search page. For example, the input of the user may include a text input obtained using an input module (e.g., the input module 150 of FIG. 1, a keyboard, a mouse, or a display) of the electronic device. For example, the input of the user may include a voice input of the user. As described above with reference to FIG. 6, the voice input of the user may be converted into text data by being analyzed using a natural language platform, and the intent of the user may be determined based on the text data. For example, as shown in FIG. 13, the electronic device may obtain the input of the user, "Galaxy Z Flip 5 specifications," on the screen 1310.

The electronic device may generate a search request based on the obtained input of the user, "Galaxy Z Flip 5 specifications." The electronic device may display, on a screen 1320, a first result page (result page_1) including a search result for the search request. The result page may refer to a page including the search result for the search request. The electronic device may display, on the screen 1320, at least a portion of the search page (or search screen).

The electronic device may detect the input of the user for the search page from a screen 1330. For example, the electronic device may detect a gesture input of the user of pointing, with the body part (e.g., an eye or a finger) of the user, a portion of the search page displayed on the screen 1330. The electronic device may obtain a bookmark input for the first result page (result page_1) based on detecting the input of the user for the search page when displaying the first result page (result page_1) including the search result. For example, when detecting an input of the user requesting the display of the search page again when displaying the search result, the electronic device may obtain a bookmark input for a page (e.g., the first result page (result page_1)) including the currently displayed search result.

The electronic device may display the search page on a screen 1340. The electronic device may further display at least a portion of the first result page (result page_1) together with the search page. When the bookmark input for the first result page (result page_1) is obtained from the screen 1330, the electronic device may display, on the screen 1340, at least a portion of the first result page (result page_1) as a bookmark object.

The electronic device may obtain the input of the user, "Galaxy Z Flip 5 specification details," from the screen 1340.

The electronic device may generate a search request based on the obtained input of the user, "Galaxy Z Flip 5 specification details." The electronic device may display, on a screen 1350, a second result page (result page_2) including a search result for the search request. The electronic device may display, on the screen 1350, at least a portion of the search page (or search screen) and at least a portion of the first result page (result page_1).

When the second result page (result page_2) is displayed on the screen 1350, the electronic device may detect the input of the user for the first result page (result page_1). For example, the electronic device may detect a gesture input of the user of pointing, with the body part (e.g., an eye or a finger) of the user, a portion of the first result page (result page_1) displayed on the screen 1350. Based on detecting the input of the user for the first result page (result page_1) including another search result when displaying the second result page (result page_2) including the search result, the electronic device may provide a comparison interface for the first result page (result page_1) and the second result page (result page_2).

When the input of the user for the other search result is detected when displaying the search result, the electronic device may provide, on a screen 1360, the comparison interface of a page (e.g., the first result page (result page_1)) including the search result and a page (e.g., the second result page (result page_2)) including the other search result. The electronic device may display, on the screen 1360, the first result page (result page_1) and the second result page (result page_2) side by side.

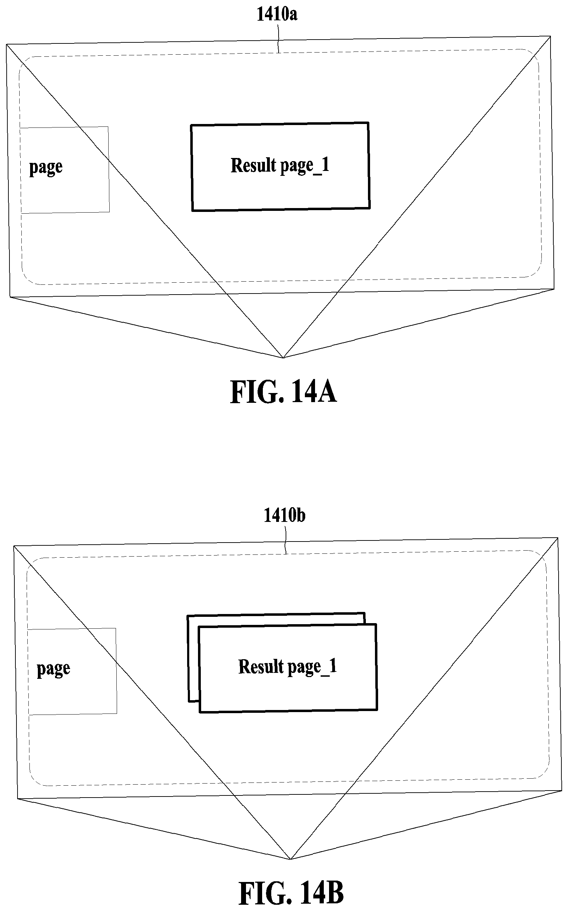

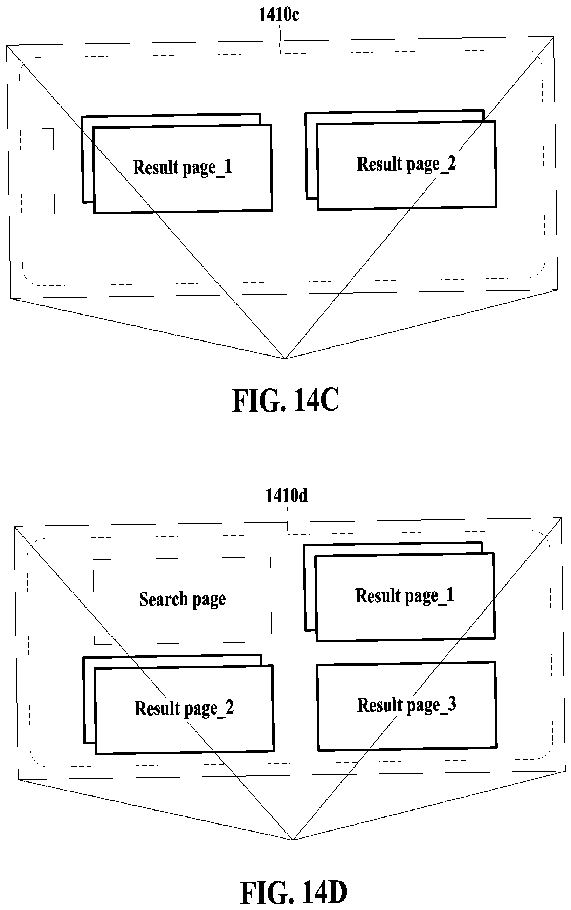

FIGS. 14A, 14B, 14C, and 14D are diagrams illustrating examples of a placement of a screen for displaying a result page including a search result, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may provide an interface for displaying one or more pages (e.g., one or more result pages).

In FIG. 14A, the electronic device may display, on a screen 1410a, a first result page (result page_1) obtained from a search page. The electronic device may display at least a portion of the search page while displaying the first result page (result page_1).

In FIG. 14B, the electronic device may display, on a screen 1410b, the first result page (result page_1) obtained from the search page. The first result page (result page_1) may be a bookmarked page. Bookmark information of the first result page (result page_1) may include information for accessing another page (e.g., a preceding page of the first result page (result page_1)) related to the first result page (result page_1). Based on the bookmark information of the first result page (result page_1) including information about the other page, the electronic device may display a window of the first result page (result page_1) in a stacked form with a window of the other page.

In FIG. 14C, the electronic device may display the first result page (result page_1) obtained from the search page and a second result page (result page_2) obtained from the search page. The electronic device may display, on a screen 1410c, a comparison interface of the first result page (result page_1) and the second result page (result page_2) based on an input of a user. The electronic device may display the first result page (result page_1) and the second result page (result page_2) side by side.

In FIG. 14D, the electronic device may display the first result page (result page_1), the second result page (result page_2), and a third result page (result page_3) obtained from the search page. The electronic device may display, on a screen 1410d, the comparison interface of the first result page (result page_1), the second result page (result page_2), and the third result page (result page_3) based on the input of the user. As shown in FIG. 14D, the electronic device may display the search page together with the first result page (result page_1), the second result page (result page_2), and the third result page (result page_3).

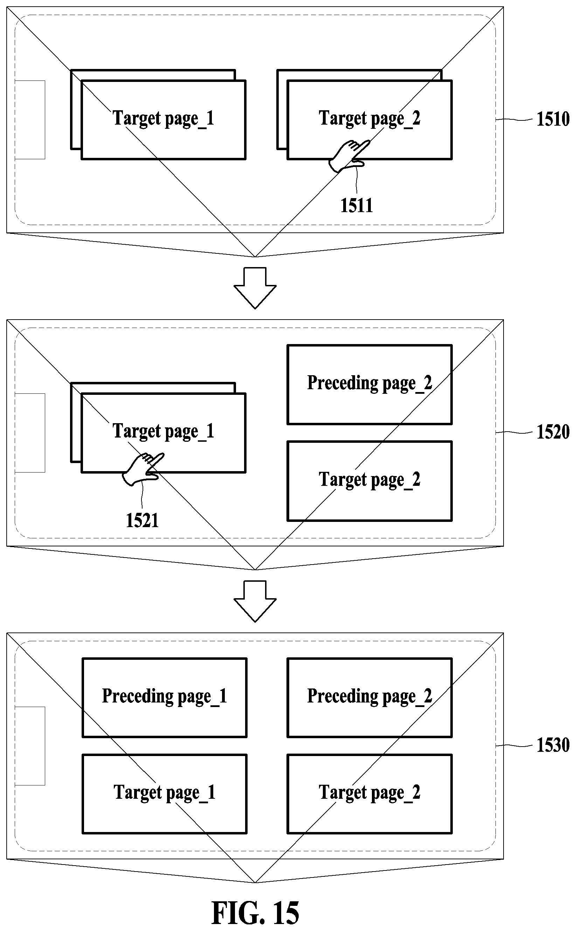

FIG. 15 is a diagram illustrating an example of an operation in which an electronic device provides a comparison interface between a plurality of target pages and a plurality of preceding pages, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may provide the comparison interface between a plurality of bookmarked target pages.

The electronic device may sequentially store pieces of bookmark information on a first target page (target page_1) and a second target page (target page_2). First bookmark information (also referred to as "bookmark information") of the first target page (target page_1) may include information for accessing a first preceding page (preceding page_1) related to the first target page (target page_1). Second bookmark information (also referred to as 'other bookmark information') of the second target page (target page_2) may include information for accessing a second preceding page (preceding page_2) related to the second target page (target page_2).

For example, the electronic device may display the first preceding page (preceding page_1). The electronic device may display the first target page (target page_1) after displaying the first preceding page (preceding page_1). Based on obtaining a bookmark input for the first target page (target page_1), the electronic device may store the first bookmark information including information for accessing the first target page (target page_1). Based on the relevance between the first target page (target page_1) and the first preceding page (preceding page_1), the electronic device may add the information for accessing the first preceding page (preceding page_1) to the first bookmark information.

The electronic device may display the second preceding page (preceding page_2). The electronic device may display the second target page (target page_2) after displaying the second preceding page (preceding page_2). The electronic device may obtain a bookmark input of the user for bookmarking the second target page (target page_2). Based on obtaining the bookmark input for the second target page (target page_2), the electronic device may store the second bookmark information including information for accessing the second target page (target page_2). Based on the relevance between the second preceding page (preceding page_2) and the second target page (target page_2), the electronic device may add the information for accessing the second preceding page (preceding page_2) to the second bookmark information. For example, based on the relevance between the second preceding page (preceding page_2) and the second target page (target page_2), the electronic device may store other bookmark information including the information for accessing the second preceding page (preceding page_2) and the information for accessing the second target page (target page_2).

Based on obtaining the input of the user for comparing the first target page (target page_1) with the second target page (target page_2), the electronic device may display the comparison interface between the first target page (target page_1) and the second target page (target page_2). For example, as described above with reference to FIG. 14B, the electronic device may display the first target page (target page_1) and the second target page (target page_2) side by side.

Referring to FIG. 15, the electronic device may bookmark the first target page (target page_1) together with the first preceding page (preceding page_1) and may bookmark the second target page (target page_2) together with the second preceding page (preceding page_2). The electronic device may obtain an input of the user requesting the comparison between the first target page (target page_1) and the second target page (target page_2), which are bookmarked. The electronic device may display, on a screen 1510, the comparison interface including the first target page (target page_1) and the second target page (target page_2). The electronic device may display, on the screen 1510, the first target page (target page_1) via a first window corresponding to the first target page (target page_1) and may display the second target page (target page_2) via a second window corresponding to the second target page (target page_2).

For example, the electronic device may display, on the screen 1510, a window corresponding to the first target page (target page_1) in the form in which a plurality of windows is stacked, based on the bookmark information of the first target page (target page_1) including information about the first preceding page (preceding page_1). The electronic device may display a window corresponding to the second target page (target page_2) in the form in which a plurality of windows is stacked, based on the bookmark information of the second target page (target page_2) including information about the second preceding page (preceding page_2).

The electronic device may obtain an additional input 1511 of the user requesting the display of the preceding page on the screen 1510. For example, when an input of the user pointing to the window corresponding to the second target page (target page_2) is detected, the electronic device may obtain the additional input 1511 of the user requesting the display of the second preceding page (preceding page_2) related to the second target page (target page_2).

The electronic device may change the comparison interface to display at least one of the first preceding page (preceding page_1) or the second preceding page (preceding page_2), based on obtaining the additional input 1511 of the user requesting the display of the preceding page on a screen 1520. The electronic device may display, on the screen 1520, the second preceding page (preceding page_2) related to the second target page (target page_2), based on the additional input 1511 of the user for the second target page (target page_2).

The electronic device may obtain an additional input 1521 of the user requesting the display of the preceding page on the screen 1520. For example, when an input of the user pointing to the window corresponding to the first target page (target page_1) is detected, the electronic device may obtain the additional input 1521 of the user requesting the display of the first preceding page (preceding page_1) related to the first target page (target page_1).

The electronic device may display, on a screen 1530, the first preceding page (preceding page_1) related to the first target page (target page_1), based on the additional input 1521 of the user for the first target page (target page_1). When the comparison interface including the first preceding page (preceding page_1) and the second preceding page (preceding page_2) is displayed, the electronic device may display, on the screen 1530, the first target page (target page_1) and the second target page (target page_2) side by side and may display the first preceding page (preceding page_1) and the second preceding page (preceding page_2) side by side, thereby providing the comparison interface for easy comparison between the target pages and between the preceding pages.

In FIG. 15, the additional input of the user requesting the display of the preceding page is mainly described as specifying a predetermined target page but is not limited thereto. For example, when detecting the additional input of the user requesting the display of the preceding page for the comparison interface when displaying the comparison interface between the first target page (target page_1) and the second target page (target page_2), the electronic device may display both the first preceding page (preceding page_1) and the second preceding page (preceding page_2).

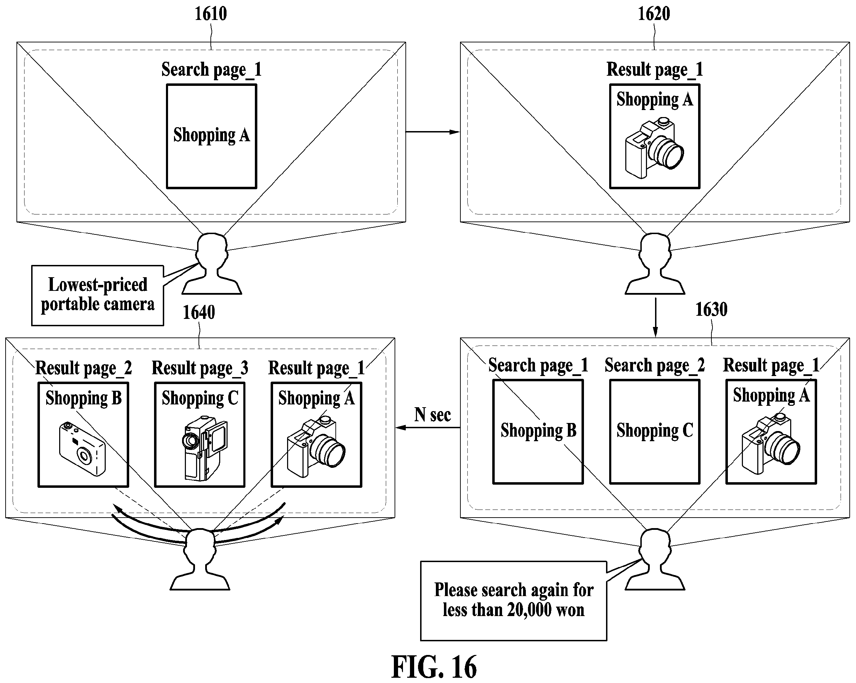

FIG. 16 is a diagram illustrating an example of an operation in which an electronic device obtains an input of a user after bookmarking a target page, according to various embodiments.

An electronic device (e.g., the electronic device 101 of FIG. 1, the electronic device 201 of FIG. 2, the electronic device 301 of FIG. 3, the electronic device 401 of FIG. 4, and the electronic device 501 of FIG. 5), according to an embodiment, may perform a recommendation for an input of the user for a subsequent page and/or an interpretation of the input of the user, based on bookmark information.

The subsequent page may refer to a page displayed by the electronic device after bookmarking the target page. For example, the subsequent page may refer to a page later displayed after displaying the target page. For example, the subsequent page may refer to a page in which the input of the user occurs after bookmarking the target page.

According to an embodiment, the electronic device may generate and/or provide a recommendation user input for the subsequent page, based on the bookmark information.

The electronic device may display the target page after displaying a preceding page and may bookmark the target page based on a bookmark input for the target page. The electronic device may also store, in bookmark information of the target page, information about the preceding page related to the target page. The electronic device may display the subsequent page after storing the bookmark information of the target page.

The electronic device may generate the recommendation user input for the subsequent page, based on the bookmark information. For example, the electronic device may generate the recommendation user input based on at least one of the information about the preceding page or information about the target page. For example, information about a page (e.g., a preceding page and a target page) may include at least one of information about the input of the user obtained through the page, information about a search request corresponding to a search result when the page includes a search result, information about content included in the page, or information for accessing the page.

For example, the electronic device may select a page that is similar to the subsequent page from among the preceding pages or the target pages and may generate the input of the user obtained through the selected page as the recommendation user input for the subsequent page.

For example, the preceding page and the target page may be pages provided by a server providing shopping service A. The preceding page may be a product detail page including information about a product (e.g., spinach), and the subsequent page may be a cart page corresponding to a cart. The cart, which is an example of a space (e.g., a virtual space) provided by a shopping service, may include information about a product registered by the user as a product to be purchased. For example, the user may add a predetermined product to the cart.

The subsequent page may be a page provided by a server providing shopping service B. The subsequent page may be a page for searching for a product in the shopping service B. Based on the preceding page being the product detail page including information about spinach, the electronic device may generate the recommendation user input for inputting the search term 'spinach' in the subsequent page.

The electronic device may display a graphical object (e.g., a recommendation user input object) for the recommendation user input. Based on a simple input of the user (e.g., an input of the user pointing to the recommendation user input object) for the recommendation user input object, the electronic device may obtain an input of the user specified by the recommendation user input.

According to an embodiment, when searching for and comparing the same or similar products in a plurality of shopping services, when the user searches for products through the shopping service A, registers the products in the cart, bookmarks the cart page, and then searches for the products through the shopping service B, the user may search for the products in the shopping service B and/or register the products in the cart through a simple operation using the recommendation user input.

According to an embodiment, the electronic device may determine the intent of the user corresponding to the input of the user, which is input through the subsequent page, based on the bookmark information.

The electronic device may display the subsequent page after storing the bookmark information. When displaying the subsequent page, the electronic device may obtain the input (e.g., a voice input) of the user. The electronic device may determine the intent of the user based on the bookmark information and the input of the user.

For example, the electronic device may obtain a voice input of the user when displaying the subsequent page. The electronic device may determine the intent of the user from the voice input of the user. As described above with reference to FIG. 6, the electronic device may analyze the voice input of the user using a natural language platform, and the natural language platform may include an ASR module and/or an NLU module. The electronic device may convert the voice input of the user into text data through the ASR module and may identify the intent of the user from the text data through the NLU module. The electronic device may further use the bookmark information when identifying the intent of the user from the text data.

Referring to FIG. 16, for example, the electronic device may display, on a screen 1610, a first search page (search page_1) provided by the shopping service A. When displaying the first search page (search page_1) on the screen 1610, the electronic device may obtain the voice input of the user, "Lowest-priced portable fan." The electronic device may determine the intent of the user corresponding to the voice input of the user to be "Search for the lowest-priced product among portable fans in the shopping service A." The electronic device may generate a search request based on the determined intent of the user. The electronic device may display, on a screen 1620, as a first result page (result page_1), a product detail page corresponding to the lowest-priced product among portable fans, found in the shopping service A. The electronic device may bookmark the first result page (result page_1) on the screen 1620.

The electronic device may display, on a screen 1630, a second search page (search page_2) provided by the shopping service B and a third search page (search page_3) provided by shopping service C. When displaying the second search page (search page_2) and the third search page (search page_3) on the screen 1630, the electronic device may obtain a voice input of the user, "Please search again for less than 20,000 won." When determining the intent of the user corresponding to the voice input of the user, the electronic device may further use bookmark information of the first result page (result page_1), together with the voice input of the user, "Please search again for less than 20,000 won." Based on the voice input of the user, "Please search again for less than 20,000 won," and the voice input of the user, "Lowest-priced portable fan" included in the bookmark information of the first result page (result page_1), the electronic device may determine the intent of the user to be "Please search for a portable fan priced under 20,000 won in each shopping service." The electronic device may generate a search request based on the determined intent of the user.

The electronic device may display, on a screen 1640, a product detail page corresponding to the portable fan priced at 20,000 won, found in the shopping service B, as a second result page (result page_2). The electronic device may display, on the screen 1640, a product detail page corresponding to the portable fan priced at 19,000 won, found in the shopping service C, as a third result page. The electronic device may provide, on the screen 1640, a comparison interface between the first result page (result page_1), the second result page (result page_2), and the third result page (result page_3).

Using the bookmark information to determine the intent of the user corresponding to the input of the user obtained through the subsequent page, the electronic device, according to an embodiment, may reach the result page (e.g., the second result page_2 and the third result page_3) with a simple input for the subsequent page when the user desires to perform the comparison between the result pages by repeating similar operations.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC)

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a complier or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is used as singular; however, one skilled in the art will appreciate that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device capable of providing instructions or data to or being interpreted by the processing device. The software also may be distributed over network-coupled computer systems so that the software is stored and executed in a distributed fashion. The software and data may be stored in a non-transitory computer-readable recording medium.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs and digital video discs (DVDs); magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

## Claims

1. An electronic device (101; 201; 301; 401; 501) comprising:
a display (160; 205; 210; 320; 421);
a processor (120); and
memory (130) storing instructions,
wherein the instructions, when executed by the processor (120), cause the electronic device (101; 201; 301; 401; 501) to:
display a preceding page;
display a target page after displaying the preceding page;
obtain a bookmark input of a user for bookmarking the target page;
storing, in the memory (130), bookmark information comprising information for accessing the target page; and
add information for accessing the preceding page to the bookmark information, based on a relevance between the preceding page and the target page.

2. The electronic device (101; 201; 301; 401; 501) of claim 1, further comprising:
a communication module (190),
wherein the display (160; 205; 210; 320; 421) comprises a first display (205) configured to output a right image corresponding to a right eye of the user and a second display (210) configured to output a left image corresponding to a left eye of the user, and
wherein the instructions, when executed by the processor (120), cause the electronic device (101; 201; 301; 401; 501) to:
receive a display command for the preceding page and the target page from an external device (102; 104) configured to simultaneously display the preceding page and the target page via respectively corresponding windows;
display the preceding page and the target page on the display (160; 205; 210; 320; 421) via arranged windows in a virtual space (500);
determine, based on obtaining the bookmark input for the target page, whether a preceding page displayed simultaneously with the target page exists;
determine, based on an existence of the preceding page displayed simultaneously with the target page by the external device (102; 104), whether each of the preceding page and the target page comprises a search result for a search request corresponding to a corresponding page; and
add the information for accessing the preceding page to the bookmark information, based on the preceding page and the target page comprising the search result.

3. The electronic device (101; 201; 301; 401; 501) of one of claims 1 and 2, further comprising:
a communication module (190),
wherein the display (160; 205; 210; 320; 421) comprises a first display (205) configured to output a right image corresponding to a right eye of the user and a second display (210) configured to output a left image corresponding to a left eye of the user, and
wherein the instructions, when executed by the processor (120), cause the electronic device (101; 201; 301; 401; 501) to:
receive a display command for the target page from an external device (102; 104) configured to display the target page after displaying the preceding page;
display the target page via a window placed in a virtual space (500), based on the display command; and
further display the preceding page together with the target page via arranged windows in the virtual space (500), based on the relevance between the preceding page and the target page.

4. The electronic device (101; 201; 301; 401; 501) of one of claims 1 to 3, further comprising:
a communication module (190),
wherein the display (160; 205; 210; 320; 421) comprises a first display (205) configured to output a right image corresponding to a right eye of the user and a second display (210) configured to output a left image corresponding to a left eye of the user, and
wherein the instructions, when executed by the processor (120), cause the electronic device (101; 201; 301; 401; 501) to:
receive a display command for the target page from an external device (102; 104) configured to display the target page;
display the target page via a window placed in a virtual space (500), based on the display command;
receive, from a server configured to provide the target page, information about the preceding page as a page related to the target page; and
further display, based on receiving the information about the preceding page, the preceding page together with the target page via arranged windows in the virtual space (500).

5. The electronic device (101; 201; 301; 401; 501) of one of claims 1 to 4, wherein the instructions, when executed by the processor (120), cause the electronic device (101; 201; 301; 401; 501) to:
obtain an input of the user from the preceding page;
perform a first operation among a plurality of operations comprising a function, based on the input of the user obtained from the preceding page; and
determine that the preceding page is related to the target page, based on the target page comprising content determined according to a performance result of the first operation and an input of the user obtained through the target page performing a second operation among the plurality of operations.

6. The electronic device (101; 201; 301; 401; 501) of one of claims 1 to 5, wherein the instructions, when executed by the processor (120), cause the electronic device (101; 201; 301; 401; 501) to:
display the preceding page comprising a search result for a preceding search request generated based on an input of the user;
obtain another input of the user after displaying the preceding page;
display the target page comprising a search result for a target search request generated based on the other input of the user; and
determine whether to add the information for accessing the preceding page to the bookmark information, based on a relevance between the preceding search request and the target search request.

7. The electronic device (101; 201; 301; 401; 501) of one of claims 1 to 6, wherein the instructions, when executed by the processor (120), cause the electronic device (101; 201; 301; 401; 501) to:
display a bookmark object indicating that the target page is bookmarked, based on storing the bookmark information; and
display the preceding page and the target page based on obtaining an
input of the user for the displayed bookmark object.

8. The electronic device (101; 201; 301; 401; 501) of one of claims 1 to 7,
wherein the preceding page comprises a first preceding page,
wherein the target page comprises a first target page, and
wherein the instructions, when executed by the processor (120), cause the electronic device (101; 201; 301; 401; 501) to:
display a second preceding page;
display a second target page after displaying the second preceding page;
obtain a bookmark input of the user for bookmarking the second target page;
store other bookmark information comprising information for accessing the second preceding page and information for accessing the second target page, based on a relevance between the second preceding page and the second target page;
display a comparison interface between the first target page and the second target page, based on obtaining an input of the user for comparing the first target page with the second target page; and
change the comparison interface to display at least one of the first preceding page or the second preceding page, based on obtaining an additional input of the user requesting a display of a preceding page.

9. The electronic device (101; 201; 301; 401; 501) of one of claims 1 to 8, wherein the instructions, when executed by the processor (120), cause the electronic device (101; 201; 301; 401; 501) to:
display a subsequent page after storing the bookmark information; and
generate a recommendation user input for the subsequent page, based on the bookmark information.

10. The electronic device (101; 201; 301; 401; 501) of one of claims 1 to 9, wherein the instructions, when executed by the processor (120), cause the electronic device (101; 201; 301; 401; 501) to:
display a subsequent page after storing the bookmark information;
obtain an input of the user when displaying the subsequent page; and
determine intent of the user based on the bookmark information and the input of the user.

11. The electronic device (101; 201; 301; 401; 501) of one of claims 1 to 10, wherein the instructions, when executed by the processor (120), cause the electronic device (101; 201; 301; 401; 501) to display at least a portion of the preceding page together with the target page, based on enabling a display history view.

12. A method, performed by an electronic device, the method comprising:
displaying a preceding page on a display (160; 205; 210; 320; 421);
displaying a target page after displaying the preceding page;
obtaining a bookmark input of a user for bookmarking the target page;
storing, in memory (130), bookmark information comprising information for accessing the target page; and
adding information for accessing the preceding page to the bookmark information, based on a relevance between the preceding page and the target page.

13. The method of claim 12, wherein the displaying of the target page comprises:
receiving a display command for the preceding page and the target page from an external device (102; 104) configured to simultaneously display the preceding page and the target page via respectively corresponding windows; and
displaying the preceding page and the target page on the display (160; 205; 210; 320; 421) via arranged windows in a virtual space (500),
wherein the adding of the information for accessing the preceding page to the bookmark information comprises:
determining, based on obtaining the bookmark input for the target page, whether a preceding page displayed simultaneously with the target page exists;
determining, based on an existence of the preceding page displayed simultaneously with the target page by the external device (102; 104), whether each of the preceding page and the target page comprises a search result for a search request corresponding to a corresponding page; and
adding the information for accessing the preceding page to the bookmark information, based on the preceding page and the target page comprising the search result.

14. The method of one of claims 12 and 13, wherein the displaying of the
target page comprises:
receiving a display command for the target page from an external device (102; 104) configured to display the target page after displaying the preceding page;
displaying the target page via a window placed in a virtual space (500),
based on the display command; and
further displaying the preceding page together with the target page via arranged windows in the virtual space (500), based on the relevance between the preceding page and the target page.

15. A non-transitory computer-readable storage medium storing one or more computer programs including instructions for performing the method of one of claims 12 to 14.
